# EUROPEAN PATENT SPECIFICATION

(11) **EP 1 237 149 B1**
(45) Date of publication and mention of the grant of the patent: **02.11.2005**
(21) Application number: 01309293.7
(22) Date of filing: 01.11.2001
(51) Int. Cl.: G10L 19/04, G10L 19/14

(54) **Scalable digital audio codec**
Skalierbares digitales Audio Codec
Codec audio digital échelonnable

(30) Priority: 02.03.2001 US 796691
(43) Date of publication of application: 04.09.2002
(60) Divisional application: 05019205.3
(73) Proprietor: Samsung Electronics Co., Ltd., Suwon-si, Gyeonggi-Do (KR)
(72) Inventor: Kim, Hong-kee, Suwon-City, Kyungki-do (KR); Choi, Sung-pil, Nowon-gu, Seoul (KR)
(74) Representative: Neill, Alastair William

(56) References cited:
- US-A- 6 108 625
- US-A- 6 122 618
- DATABASE WPI Section EI, Week 200161 Derwent Publications Ltd., London, GB; Class T01, AN 2001-543796 XP002245354 -& JP 2000 341627 A (NEC CORP), 8 December 2000 (2000-12-08)

## Description

The present invention relates to an apparatus for playing digital audio, the apparatus comprising storage means for storing digital audio data, playback means for playing audio data stored in the storage means, means for receiving audio signals and processing means.

Many suggestions have been made for an audio signal encoding method that can provide increased compression of the audio signal with good fidelity.

The MPEG/audio standard or the AC-2/AC-3 method provides audio quality which is most similar to the sound produced by compact discs, by reducing the bit rate by one sixth or one eighth from the bit rate of a conventional digital encoder, i.e., generally in the range from 64Kbps to 384Kbps.

Much research has gone into ways to provide high fidelity audio at reduced bit rates. One significant result is MPEG-2 Advanced Audio Coding (AAC) which was selected to be an International Standard. MPEG-2 AAC was also recommended by an experts group as a method that could provide high fidelity audio at a bit rate of 64Kbps.

In encoders which employ conventional encoding methods, audio data is encoded by an encoding method which is set in accordance with a fixed bit rate.

Portable digital audio players are constructed to play audio files generated by a conventional encoding method by downloading a file from a computer or a vending machine. However, since portable digital audio players are designed to have a small size for the convenience of the carrier, it is practically impossible to extend the memory capacity of a recording medium beyond a predetermined extent. In other words, portable digital audio players have a limited memory capacity.

Generally, portable digital audio players have a memory of limited capacity, such as 16, 32 or 64 megabytes, which limits the size and number of audio files that can be stored in portable digital audio players.

In order to download a digital audio file generated by the conventional encoding methods into a portable digital audio player, a user has to select a digital audio file within a memory limit of the digital audio player. For example, if 29 megabytes of files are already stored in the recording medium of a digital audio player which has a memory capacity of 32 megabytes, the user is only able to download an additional audio file that will fit within the remaining free bytes, i.e. within 3 megabytes. In the event that the user's desired audio file is 4 megabytes in size, the user cannot download the audio file, which means the free bytes are not efficiently utilized.

The 4-megabyte audio file could be downloaded if another file larger than 1 megabyte is deleted. However, this causes inconvenience to the user since the deleted file will no longer be available.

As described above, conventional digital audio players and audio file generators do not satisfy the demand of users who want to reduce the size of digital audio files even if that means a degradation of audio quality. In other words, users usually find the conventional digital audio player or the audio file generator generating the audio files according to conventional encoding methods to be inconvenient, since the users are not allowed to adjust the size of data or bit rates as they wish.

JP 2000 341627 A (Abstract: DATABASE WPI Section EI, Week 2000161 Derwent Publications Ltd., London, GB; Class T01, AN 2001-543796) discloses an apparatus for playing digital audio comprising processing means which reduce the size of video and audio signals in memory by varying the compression bit rate. The apparatus operates by producing digital audio data which is coded based on an MPEG algorithm. This digital audio player thus allows the size of digital audio files to be reduced, but does not allow the user to adjust the size of data or bitrates as they wish. This document has been identified as the closest prior art and forms the basis for the precharacterising portion of claim 1.

According to the present invention there is provided an apparatus for playing digital audio, the apparatus comprising: storage means for storing digital audio data; playback means for playing audio data stored in the storage means; means for receiving audio signals; processing means; and the processing means being configured for processing audio signals, received by the means for receiving audio signals, to produce digital audio data in a layered format, having a selectable bitrate or file size, and store said digital audio data in the storage means; characterised in that the processing means includes user input means for setting the said selectable bitrate or file size.

Preferably, said digital audio data is in a bit sliced arithmetic coding format.

The means for receiving audio signals preferably comprises means for receiving digital audio signals and the processing means is configured to convert received digital audio signals, having a format other than the format employed for said digital audio data, into the format employed for said digital audio data.

Preferably, the processing means is configured to truncate received digital audio signals, having the format employed for said digital audio data, to produce said digital audio data.

Preferably, the means for receiving audio signals comprises means for receiving audio signals from the Internet.

The storage means and the playback means may be comprised in a portable digital audio player with the processing means and the means for receiving audio signals are comprised in a personal computer.

According to the present invention there is also provided a digital audio player, a computer having a digital audio editor and a method of encoding an audio signal as set forth in the appended claims. Preferred features of the invention will be apparent from the dependent claims, and the description which follows.

Embodiments of the present invention will now be described, by way of example, with reference to the accompanying drawings, in which:
Figure 1 is a block diagram of a computer having an audio editor according to the present invention;
Figure 2 shows an example of a menu screen provided by a menu providing portion of the audio editor shown in Figure 1;
Figures. 3A ~ 3D show an example of editing menu including an extraction rate selection menu;
Figure 4 is a flowchart illustrating a first process of extracting data on a computer according to the present invention;
Figure 5A is a block diagram showing a first digital audio player according to the present invention;
Figure 5B shows an example of an editing menu including an extraction rate selection menu successiveily provided when an editing function in the digital audio player shown in Figure 5A is selected;
Figure 6 is a flowchart illustrating an example of the extraction of data in the digital audio player shown in Figure 5A;
Figure 7 is a block diagram showing elements of a bit sliced encoder of a bit sliced codec employed in the present invention;
Figure 8 is a view illustrating a bit sliced coding process performed by the bit sliced encoder shown in Figure 7;
Figure 9 is a view showing the structure of a layered bit stream generated by the bit sliced coding process; and
Figure 10 is a block diagram showing elements of the bit sliced decoder of the bit sliced codec employed in an embodiment of the present invention.

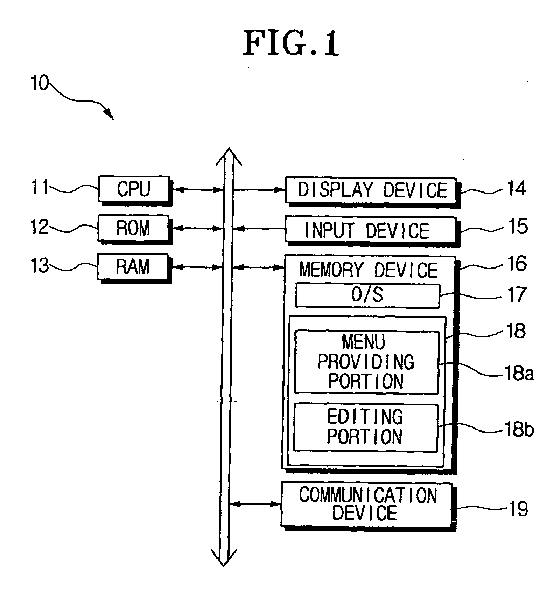

As shown in Figure 1, a computer 10 includes a central processing unit (CPU) 11, a ROM 12, a RAM 13, a display device 14, an input device 15 such as a mouse and/or a keyboard, a memory device 16, and a communication device 19.

The memory device 16 stores an operating systems (OS) 17 such as Windows98, Windows2000, etc. and an audio editor program 18.

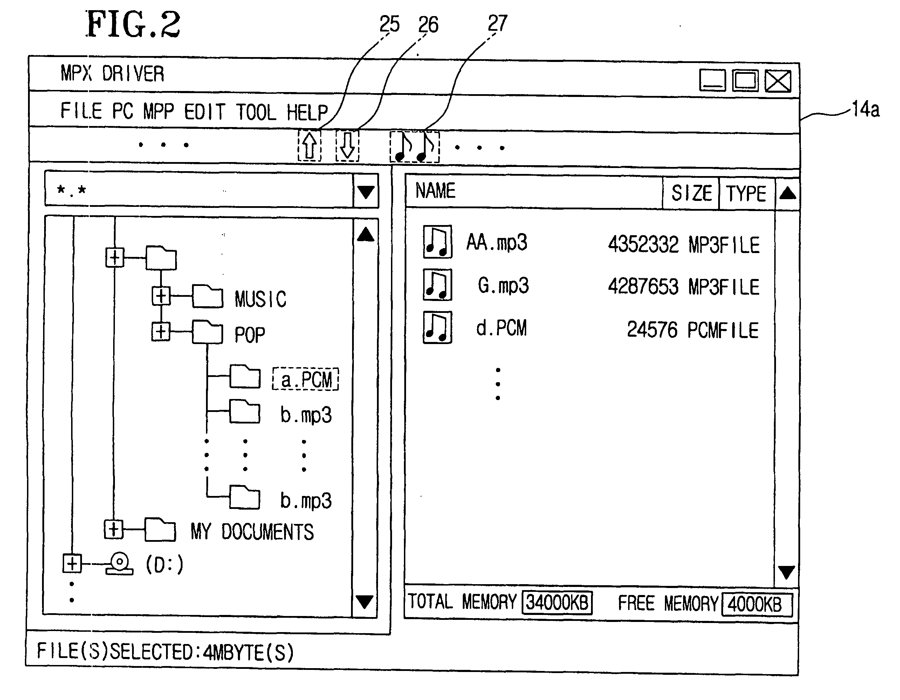

The audio editor program 18 provides a menu for editing audio files with the support of the OS 17, and performs processes corresponding to a selection made by a user. The audio editor program 18 includes a menu providing portion 18a, and an editing portion 18b. The menu providing portion 18a provides a screen that shows various menus of audio editing when the audio editor program 18 is executed on the computer 10. An example of the menu screen of the menu providing portion 18a is shown in Figure 2.

The editing portion 18b performs processes according to the selection made from the menu provided by the menu providing portion 18a. The editing portion 18b includes a bit sliced codec program, *i.e*., Bit Sliced Arithmetic Coding (BSAC), which performs a layered bit sliced coding of the digital audio data.

Preferably, the audio editor program 18 is constructed such that it supports viewing and selecting of the files stored in the memory device 16 of the computer 10 and also an external device which is connected to a communication port such as a parallel port or a serial port.

For example, the menu providing portion 18 provides an environment setup menu from which a communication port of the computer 10 can be selected, and the editing portion 18b shows the list of files stored in the external device connected to a communication port and the list of files stored in the computer 10, on the same screen for comparison.

Furthermore, it is preferable that the audio editor program 18 is constructed to play the edit-completed audio file on the computer 10. That is, the bit sliced codec program of the audio editor program 18 preferably further includes a decoder for decoding a file generated by the BSAC method.

As shown in Figure 2, in a window 14a on the display device 14 which is displayed by the audio editor program 18, a list of files stored in the memory device 16 of the computer 10 is shown in the left half of the window 14a, while the list of files stored in a external device is shown in the right half of the window 14a. For example, when the external device is a portable digital audio player, the file list stored in the memory portion of the portable digital audio player is shown together with the file list of the computer 10.

A "FILE" menu provides access to command items such as file selecting, file downloading, file uploading, file opening, file saving, and environment setup, etc.

An "EDIT" menu provides access to file editing functions.

Button widgets, including a download button 25, an upload button 26, and a play button 27, which bear icons indicating their functions, are displayed in the window 14a below the menu bar.

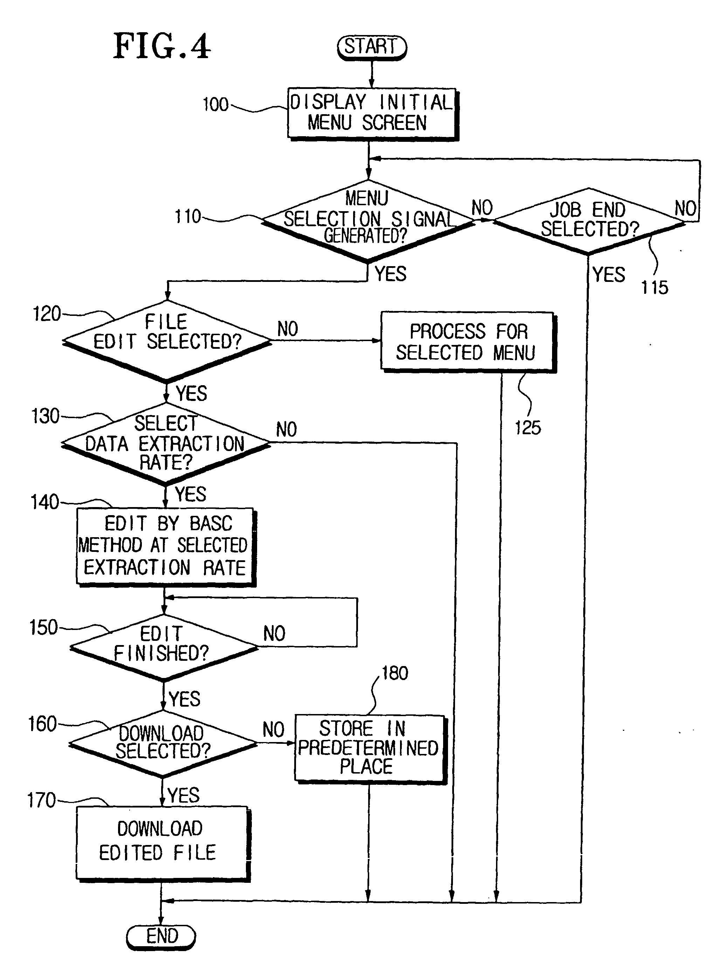

The process of editing an audio file according to a user's desired scale using the audio editor program 18 will be described below with reference to Figures 1 to 4.

First, when the audio editor program 18 is executed, an initial screen (see Figure 2) is displayed (step 100). On the initial screen, a menu is displayed by the menu providing portion 18a, and a file list of the memory device 16 of the computer 10 and a file list of a memory portion of an external device (i.e., portable digital audio player) connected to a communication port of the computer 10, are displayed. Simultaneously, the total memory size and the amount of memory remaining free of the memory portion of the external device are also displayed for the users reference during the editing process. If there is no external device connected to the computer 10, only the file list of the computer 10 is displayed.

When the user selects a file from the files stored in the memory device 16 of the computer 10, for example, when the user selects the "a.PCM" audio file (highlighted with a dotted line) through the manipulation of the input device 15, the editing portion 18b displays the size of the selected file, for example 4 Megabytes, in a lower portion of the display window shown in Figure 2. It should be noted here that more than one file may be selected for editing, and as such, the BSAC method is applied to all the selected files.

Next, it is determined whether a selection of a menu item is made from the menu or not (step 110). If not, then it is determined whether or not the user makes a selection, e.g. X (in the upper right corner of the display screen), for closing the initial screen to effectively end the audio editing job (step 115).

When the selection of a menu item is made from the menu in step 110, it is determined whether the EDIT menu is selected or not (step 120). If not, then the process corresponding to the selected menu item is performed (step 125).

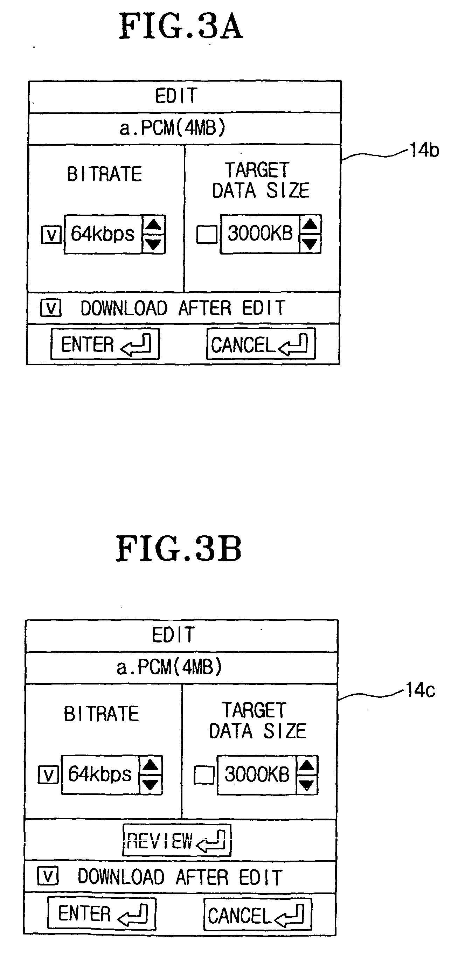

When it is determined, in step 120, that the user has selected the EDIT menu using the input device 15, a data extraction rate selection menu (see Figures 3A ^{~} 3D) is displayed. Preferably, the menu providing portion 18a provides a menu for selecting a bit rate and/or a target data size for the editing process. Here, the bit rate selecting menu is for the user's convenience to select data size and audio quality of the audio file in consideration of an audio file type. The fact to be considered is that the higher bit rate causes a higher audio quality with larger data size, while a lower bit rate causes lower audio quality but with a smaller data size.

Meanwhile, the selection menu for target data size is for the user's convenience to edit the audio file to an adjusted size which is suitable for the free capacity of the recording medium in which she/he intends to store the edited audio file. For example, the user can conveniently use this menu when she/he wants to adjust and store the audio file of more than 3 megabytes in a portable digital audio player having a free capacity of 3 megabytes.

As shown in Figure 3A, a data extraction rate selecting dialog 14b displays the name "a.PCM" of the file selected for editing, a bit rate selecting spin edit control, a target data size selecting spin edit control, and a post-edit process selection checkbox.

In a second embodiment, as shown in Figure 3B, a preview button is also provided in data extraction rate selecting dialog 14c to allow the user to sample or preview the quality of the audio file according to the selected bit rate or target size prior to editing and downloading.

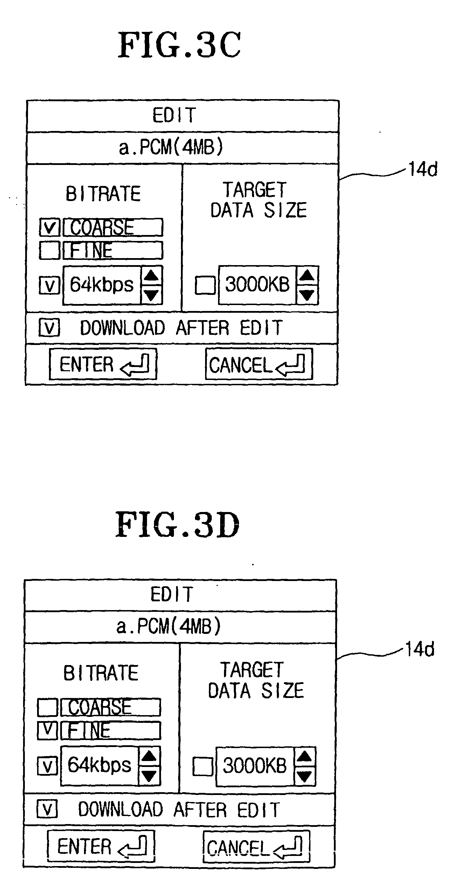

In a third embodiment, as shown in Figures 3C and 3D, a data extraction rate selecting dialog 14d displays the name "a.PCM" of the file to be edited, a bit rate selecting spin edit control, a target data size selecting spin edit control, coarse and fine adjustment checkboxes associated with the bit rate selecting spin edit control and a post-edit process selecting checkbox. It should be apparent that the third embodiment could also include a preview button as shown in Figure 3B.

If it is determined that the data extraction rate has been selected in step 130, by selecting one of the bit rates or target sizes (described in more detail below), the editing portion 18b edits the audio file by the layered Bit Sliced Arithmetic Coding (BSAC) method (step 140) according to the bit rate or target size set by the user through the extraction rate selecting dialog of Figures 3A ^{~} 3D.

After completion of the editing, if it is determined that downloading has been selected (steps S150 and S160), the edited audio file is downloaded to the digital audio player connected to the computer 10 (step 170). With respect to Figure 3B, however, if the user desires to audibly preview the results of the editing the user clicks the preview button after selecting one of the bit rates or target sizes, then a portion of the audio file is edited (encoded) by the BSAC method and stored in, for example, a temporary file. The encoded audio portion is then automatically decoded and audibly played. If the user accepts the quality of the edited audio, then the user may select the download function, and after clicking of the "enter" (i.e. OK) button on the dialog 14c, the entire file is edited by the BSAC method and downloaded (steps 140 through 170).

Meanwhile, when the downloading is not selected in step 160, a new window (not shown) is displayed requesting the user to name the edited data file, which is then stored (step 180).

Referring again to Figures 3A ^{~} 3D, the bit rate is preferably selectable in 1Kbps steps, while the target data size is selectable in 1 kilobyte steps. However, the bit rate may also be selectable in steps greater or less than 1Kbps, for example, 8 Kbps, and the target data size may be selectable in steps greater or less than 1Kbyte, for example, 500 Kbytes, with the support of the bit sliced codec program of the editing portion 18b.

When the user wants to select only a bitrate for the audio file, she/he manipulates bit rate selecting spin edit control by clicking on its up and/or down arrows to select her/his desired bit rate. When the user sees her/his desired bit rate in the bit rate selecting spin edit control, she/he stops manipulating the bit rate selecting spin edit control, and clicks on a selection confirmation checkbox at the left of the bit rate selecting spin edit control to mark a check mark (V) therein. When the user sees the check mark (V) in the selection confirming box, she/he selects whether to download or not, and clicks if necessary on the download checkbox.

When the bit rate selecting spin edit control is manipulated by the user, the display for target data size may change to display a value corresponding to the displayed bit rate. Accordingly, where the target data size display is limited to displaying only the values separated by the default step size of, for example, 500Kbytes, *i.e*., 0, 500, 1000...6000 KB, the displayed target data size will not be limited to the these values by will show that actual file size corresponding to the selected bit rate.

Additionally, when a user manipulates the scroll bar corresponding to the target data size, then the display corresponding to the bit rate value may change to display a bit rate corresponding to the displayed target data size, which may be outside the default bit rate interval.

In the third embodiment the bit rate is preferably selected at 1Kbps intervals for fine adjustment and the bit rate is preferably selected at 8Kbps intervals for coarse adjustment. Accordingly, when the coarse adjustment checkbox is checked, as shown in Figure 3C, manipulation of the bit rate spin edit control will display bit rates in 8Kbps steps, *i.e*., 8, 16, 24, 32, 40, 48, 56, 64...n Kbps. When the fine adjustment checkbox is checked, as shown in Figure 3D, manipulation of the bit rate spin edit control will display bit rates in 1Kbps steps, *i.e*., of 1, 2, 3, ..., 62, 63, 64...n Kbps. And, as described above, when the spin edit control for the bit rate is manipulated by the user, the displayed target data size may change to display a value corresponding to the displayed bit rate.

As will described below, the encoded audio data will include a header that contains bitrate information. Accordingly, the selected bit extraction rate, for example, 8Kbps per layer and the value of the highest layer, for example 64 Kbps, will be included in the header of the encoded audio signal.

When the audio file selected for downloading has already been generated by the layered BSAC method, extraction is performed from a layer corresponding to the selected bit rate.

When the user wants to play the edited file, she/he selects her/his desired file and clicks play button 27. Accordingly, the audio editor program 18 decodes the selected audio file, and outputs the file to an audio output device (not shown) such as a speaker connected to the computer 10.

As described above, the audio editor program 18 according to the present invention can be recorded in a recording medium for use. Also, when the audio editor program 18 is installed in the computer 10, the user can edit audio files on the computer 10 to a desired size. After editing the audio file by the layered BSAC method as she/he wishes, the user can use the audio file by downloading the edit completed file to a memory of a portable digital audio player having a device capable of decoding and playing the audio file.

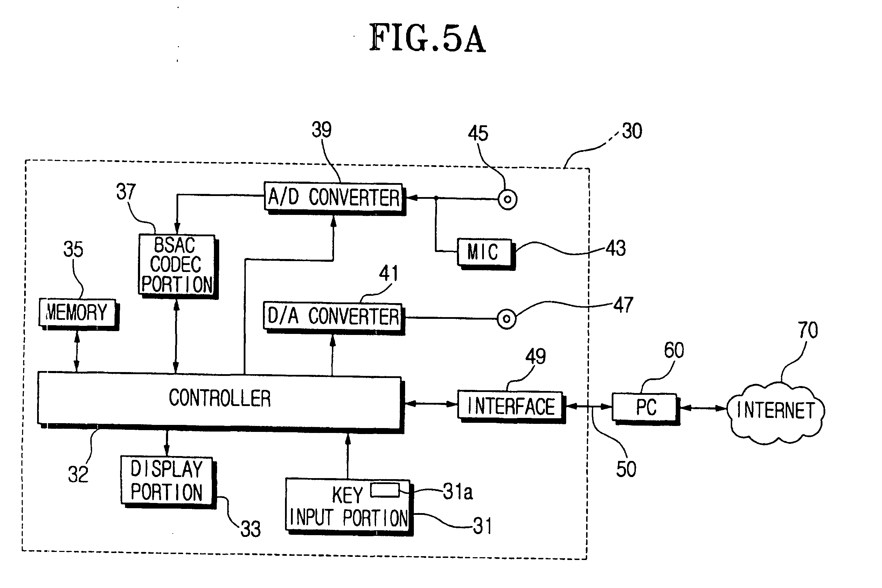

According to another aspect of the present invention, a digital audio player may edit an audio file by itself. As shown in Figure 5A, the digital audio player 30 is connected to a computer 60, connected to the Internet 70, via a communication interface 50. Thus, it is not necessary for the computer 60 to include the editing portion 18b of Figure 1.

The digital audio player 30 includes a key input portion 31, a controller 32, a display portion 33, a memory 35, a bit sliced codec portion 37, an A/D converter 39, a D/A converter 41, and an interface 49. The player 30 also includes an internal microphone (MIC) 43, an analog audio signal input terminal 45 and an analogue audio signal output terminal 47.

It is preferable that the interface 49 be constructed to perform bi-directional communication with the computer 60 through a parallel port of the computer 60 such as a parallel port for a printer, or a serial port such as a USB port, and an appropriate cable 50.

Alternatively, the interface 49 is constructed to perform bi-directional communication with the computer 60 or an external device by a wireless communication method, e.g. Bluetooth or irDA.

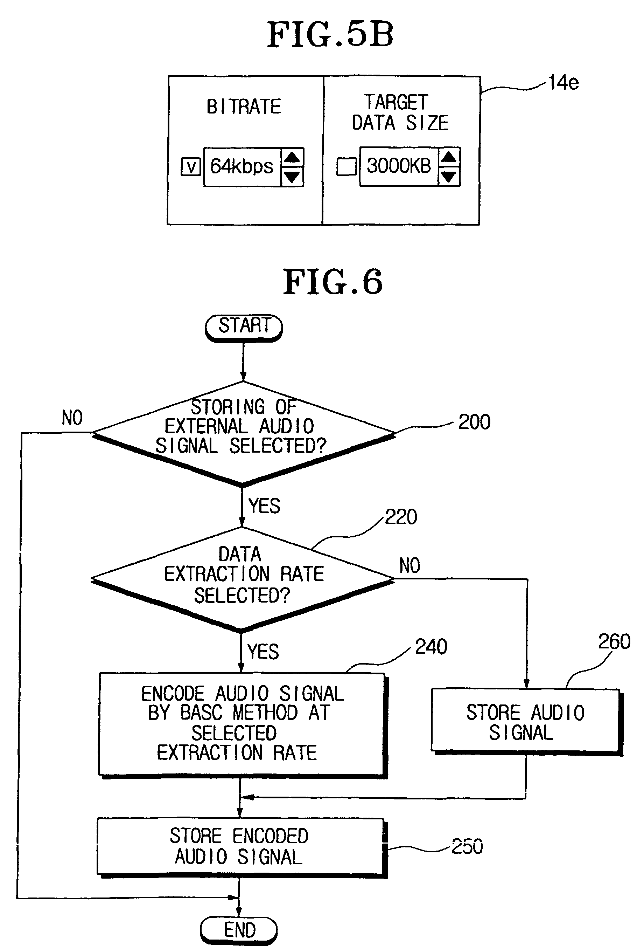

The key input portion 31 includes a plurality of keys for setting various supporting functions. The key input portion 31 also includes an key 31a for processing and storing a received audio signal at a desired extraction rate. Key 31a may be termed an options key for displaying a plurality of menu options on the display portion 33, wherein one of the displayed options may be an editing or encoding option which will cause the display portion 33 to display a screen similar to that shown in Figure 5B. Additionally, key 31a may be termed an editing key which will cause display portion 33 to immediately display a screen similar to that shown in Figure 5B. The display portion 33 displays information received from the controller 32. The controller 32 processes signals input through the key input portion 31, and accordingly controls the components of the player 30.

Furthermore, the key input portion 31 preferably includes save, play, stop, and record keys which are not shown in the drawings. The keys can be separately formed, or one key can have a plurality of functions which are distinguishable by the manner of the manipulation thereof.

The A/D converter 39 converts an analogue signal input through the input terminal 45 or through the microphone (MIC) 43 into a digital signal.

The D/A converter 41 converts a digital signal output from the controller 32 into an analogue signal, and outputs the analogue signal through the output terminal 47. There can be a plurality of output terminals 47 formed for connecting an earphone, an external device, etc.

The bit sliced codec 37 includes an encoder for performing an encoding process by the layered BSAC method and a decoder for performing a decoding process for the encoded signal by the layered BSAC method.

When an edit signal is input, the controller 32 provides a screen for displaying the amount of free memory remaining in memory 35, and a bit rate and/or a target data size selecting menu on the display portion 33. Note, however, that controller 32 could provide information with respect to the amount of free memory space available in memory 35 at all times, that is, prior to the activation of key 31b.

Considering the relatively small display capacity of the display portion 33 of the digital audio player 30, the screen providing the bit rate selection and/or target data size selection dialog can be sequentially displayed according to a screen move manipulation of the key input portion 31. The intervals of the bit rate and target data size selections are applied with the same as described above with respect to Figures 1-4.

When a data extraction rate is selected using the key input portion 31, the controller 32 extracts the audio data input through one of paths of the input portion, i.e., microphone 43, input terminal 45, and interface 49, according to the layered bit sliced arithmetic coding method, and stores the extracted data in the memory portion, i.e., in the memory 35.

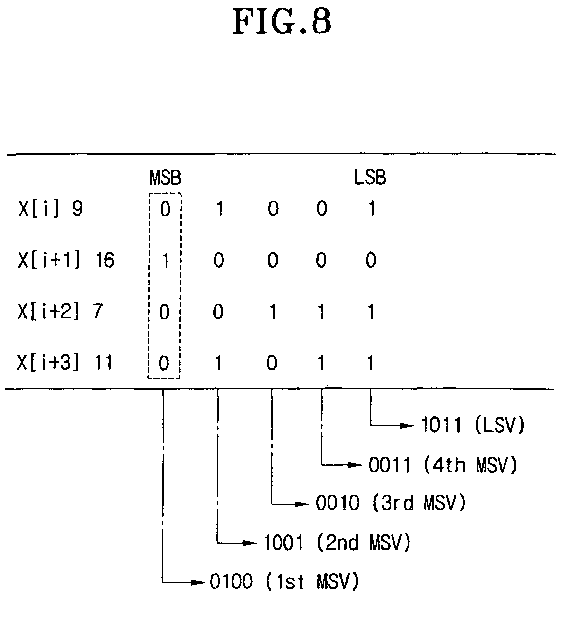

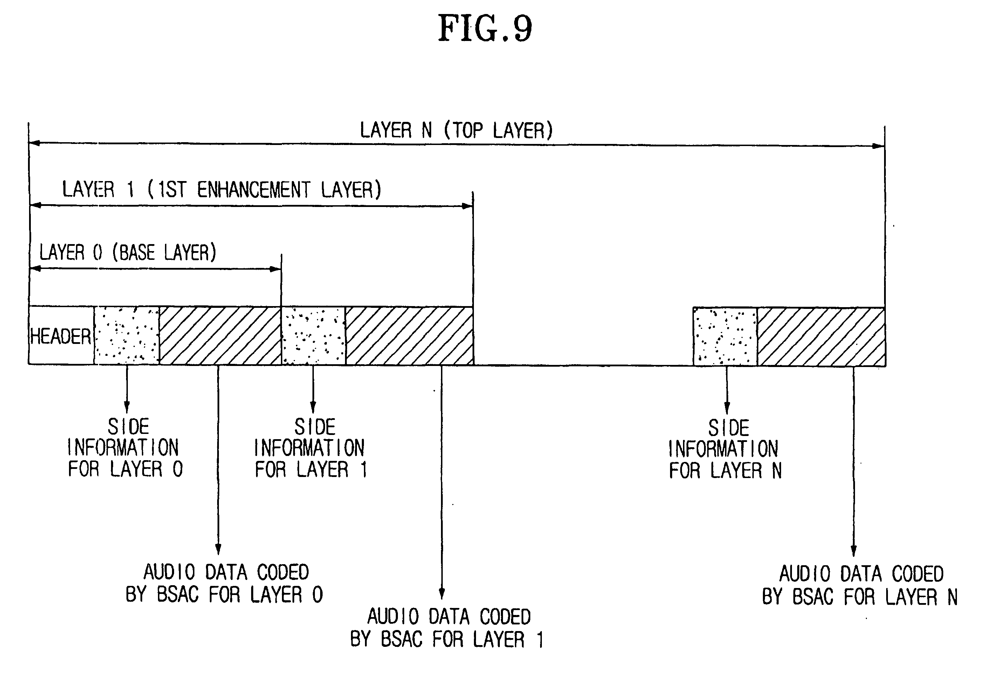

For example, when bit stream audio data generated by the layered BSAC method is input from the computer 60 through the interface 49, the controller 32 stores the data in the memory 35 until the bit rate of the layer reaches the selected rate, or until the bytes of the data reach the selected target data size. After reaching the selected rate or bytes, the data is not stored, as will be better understood from the discussion of Figures 8 and 9, below.

However, when the data input through the interface 49 is determined to be in audio data formats other than the layered BSAC, such as a pulse code modulation (PCM), the controller 32 loads the bit sliced codec portion 37 to encode the data according to the layered BSAC method to a predetermined extraction rate. Then the controller 32 stores the data in the memory 35. The type of the audio data can be determined from header information. That is, bitrate information is contained in the header. Accordingly, the selected bit extraction rate, for example, 8Kbps per layer and the value of the highest layer, for example 64 Kbps, will be included in the header of the encoded audio signal. Thus, a method exhibiting the best efficiency in reproducing the encoded audio data can be obtained by accessing the information stored in the header. For example, when audio data is encoded by an encoder at a bitrate of 96 Kbps, for example, the best quality sound can be restored by a decoder corresponding to the encoder having a bitrate of 96 Kbps.

When the data is an analogue signal input through the microphone 43 or the input terminal 45, the data is converted into digital data which is sampled at a predetermined sampling rate by the A/D converter 39. Then, the data is encoded by the bit sliced codec portion 37 according to a selected extraction rate, and stored in the memory 35.

A data editing process of the digital audio player will be described below with reference to Figure 6. Here, it should be understood that the user has preferably already selected either a desired data extraction rate by selection of a bit rate or a target data size using, for example, the data extraction rate selecting dialog 14e of Figure 5B. It should also be understood that, although Figures 5A and 5B relate to a portable digital audio player, the digital audio player can also be computer generated and displayed on a screen of the computer having an options key 31a, and activation of the options key would result in a display as shown in Figure 2 and activation of the edit key on the menu bar would result in a display either as shown in Figure 5B or as shown in any of Figures 3A - 3D.

First, it is determined whether a store select signal is input with respect to an external audio signal or not (step 200). Here, the external signal is a signal input through the input portion, i.e., through the interface 49, microphone 43, or input terminal 45. Also, the store select signal includes a signal generated from manipulation of, for example, a store or record key, on the key input portion 31, and a control signal indicating the beginning of a download from outside.

When the storing select signal is input, it is determined whether or not the data extraction rate is selected (step 220). When the data extraction rate is determined to be selected, the received audio signal is encoded by the layered bit sliced arithmetic coding (BSAC) method according to the selected extraction rate (step 240). The encoded audio signal is then stored in the memory 35 (step 250).

Meanwhile, when the received audio signal is already bitstream coded by the layered BSAC method, the data is stored until the bit rate layer of the received signal reaches the selected extraction rate corresponding to either the selected bit rate or selected target data size, which means step 240 will be omitted in this case.

When it is determined that the extraction rate is not selected in step 220, the received audio signal is directly stored in the memory 35 (step 260). Alternatively, in step 260 the audio signal may be encoded by the bit sliced arithmetic coding method according to a predetermined default bitrate and then stored in memory 35.

The process of encoding audio data by the layered bit sliced arithmetic coding method with the bit sliced codec 37 or the audio editor program 18 according to the predetermined extraction rate according to the present invention will be described below in greater detail. Meanwhile, note that the layered BSAC coding and decoding methods as employed in the present invention are similarly disclosed in US-A-6122618 and US-A-6148288.

First, the layered bit sliced encoding and decoding methods will be schematically described.

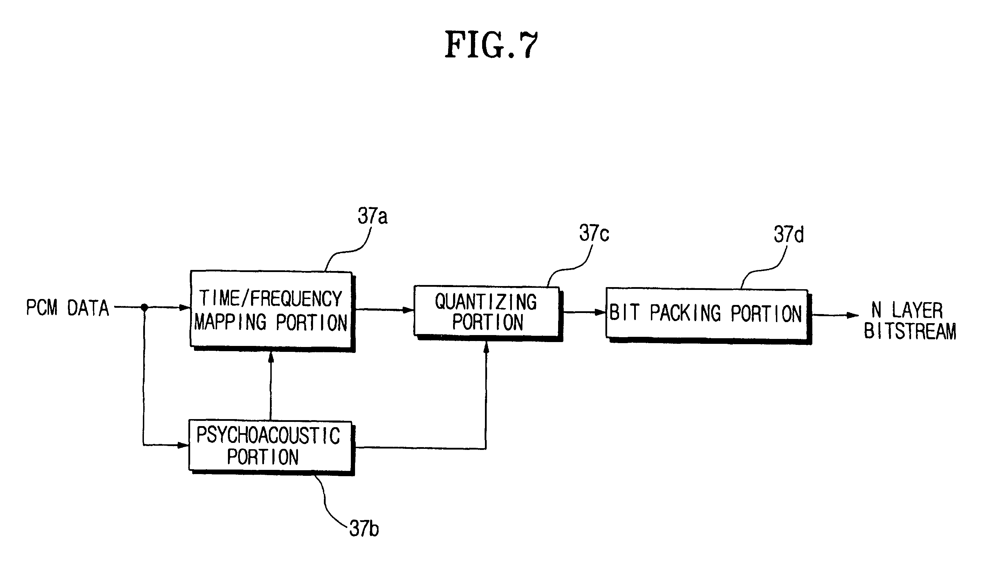

Referring to Figure 7 showing the bit sliced encoder of the bit sliced codec portion 37, the layered bit sliced encoder includes a time/frequency mapping portion 37a, a psychoacoustic portion 37b, a quantizing portion 37c, and a bit packing portion 37d.

The time/frequency mapping portion 37a converts audio signals of a temporal domain into signals of a frequency domain. The signals in the frequency domain greatly differ from each other according to a human psychoacoustic model (e.g. ISO/IEC 1117 2-3) from a signal perceptible by a human to a signal imperceptible. Accordingly, by differing the bits allocated in the respective frequency bandwidths, the compression efficiency can be increased.

The psychoacoustic portion 37b couples the converted signals by signals of predetermined subbands by the time/frequency mapping portion 37a and calculates a masking threshold at each subband using a masking phenomenon generated by interaction with the respective signals. With the masking threshold, a minimum level of signal, which has sound but imperceptible to the human due to the size of the input signal and interaction of the respective signals, can be obtained.

The quantizing portion 37c quantizes the signals for each predetermined coding band so that the quantization noise of each band becomes smaller than the masking threshold. In other words, the frequency signals of each band are applied to scalar quantization so that the magnitude of the quantization noise of each band is smaller than the masking threshold, so as to be imperceptible. Quantization is performed so that the Noise-to-Mask Ratio (NMR) value, which is a ratio for the masking threshold calculated by the psychoacoustic portion 37b to the noise generated at each band, is less than or equal to 0 dB. The NMR value less than or equal to 0 dB means that the masking threshold is higher than the quantization noise. In other words, the quantization noise is not audible.

In order to accomplish the scalable audio codec, the bit packing portion 37d combines the frequency data quantized by the quantizing portion 37c with side information about the respective subbands and the quantized information of the audio data according to the bitrate of the respective layers.

Figure 8 shows an example where the value quantized to 5 bits is represented in a binary notation. According to the layered method, the most significant bits are coupled and first encoded. For example, when encoding in 4 bit unit, the binary numbers 0100 (blocked by dots) (corresponding to the Most Significant Vector; MSV) are first encoded. Then the encoding is proceeded one vector by vector to the least significant bits. In such a situation, the bits are efficiently compressed into codes by using a proper probability distribution and arithmetic coding method. The bitstream structure generated by the above methods is shown in Figure 9.

That is, the encoder encodes the audio signal into a layered bitstream structure consisting of a base layer (layer 0) and a plurality of enhancement layers. Each layer consists of a header region, side information writing region, and a data region.

The base layer has the lowest bit rate, and the next enhancement layer has the bit rate higher than the base layer by predetermined intervals of bit rate. In this manner, the enhancement layers have increasing bit rates at certain intervals.

Only the MSBs are represented in the forehand of the base layer, so that only the contour for the all frequency components is encoded. As more bits are represented in lower bits, more detailed information can be expressed. Since detail information data values are encoded according to increasing bitrates, i.e., enhancement of layers, and audio quality can be improved.

Next, a method for constructing a scalable bitstream using the data expressed as above will be described. First, among side information to be used for the base layer, quantization bit information for each quantizing band is encoded. The quantized values are sequentially encoded from the MSBs to the LSBs, and from low frequency components to high frequency components. If quantiztion bits of a certain band are less than those of the band being currently encoded, encoding is not performed. When quantization bits of the band equal to those of the band being currently encoded, encoding is performed. Here, if there is no band restriction in encoding signals of the respective layers, sound objectionable to the ear may be generated. This is because signals are on and off when restoring signals of the layers having low bitrates, in the case of performing encoding from the MSB to the LSB, irrespective of bands. Thus, it is advisable to restrict bands appropriately according to bitrates.

After the base layer is encoded, the side information and quantized value of audio data for the next enhancement layer are encoded. In such a manner, data of all layers corresponding to the selected bit rate are encoded. The thus encoded information is collected altogether to form a bitstream.

As shown in Figure 9, the bitstream made by the encoder has a layered structure in which the lowest layer bitstream is contained in the higher layer bitstream.

The audio signal with such a layered structure is coded from more important signal components to a less important signal components. Using the thus-formed bitstreams, bitstreams having a low bitrate can be formed by simply rearranging the low bitrate bitstreams contained in the bitstream having the highest bitstream, by a user's request. In other words, bitstreams formed by encoder on a real time basis, or bitstreams stored in a medium, can be rearranged to be suitable for a desired bitrate by a user's request, to then be transmitted. Also, if the user's hardware performance is poor or the user wants to reduce the complexity of a decoder, even with appropriate bitstreams, only some bitstreams can be restored, thereby controlling the complexity.

For example, when bitrate is selected to 64 Kbps, the bitstream is constitute for top layer to be 64 Kbps from the predetermined base layer. Accordingly, in forming a scalable bitstream, the bitrate of a base layer is 16 Kbps, that of a top layer is 64 Kbps, and the respective enhancement layers has bitrate intervals of 8 Kbps, that is, the bitstream has 7 layers of 16, 24, 32, 40, 48, 56 and 64 Kbps. Since the bitstream formed by the encoder has a layered structure, the bitstream of the top layer of 64 Kbps contains the bitstreams of the respective layers (16, 24, 32, 40, 48, 56 and 64 Kbps). If a user requests data for the top layer, the bitstream for the top layer is transmitted without any processing thereof. Also, if another user requests data for the base layer (corresponding to 16 Kbps), only the forehand bitstreams are simply transmitted.

The respective layers have limited bandwidths according to bitrates, and the end quantization bands are different. When input data is a PCM data sampled at 48 KHz, and the magnitude of one frame is 1024, the number of bits usable for one frame for a bitrate of 64 Kbps is 1365.3333 (=64000 bits/sec x (1024/48000)) on the average. Similarly, the number of bits usable for one frame can be calculated according to the respective bitrates.

When an extraction rate is selected, the bitrate of the top layer for the selected extraction rate is determined, and accordingly, bitstreams are generated from the bitrates of the base layer to the targeting layer at selected bitrate intervals by the encoding process according to the layered BSAC method.

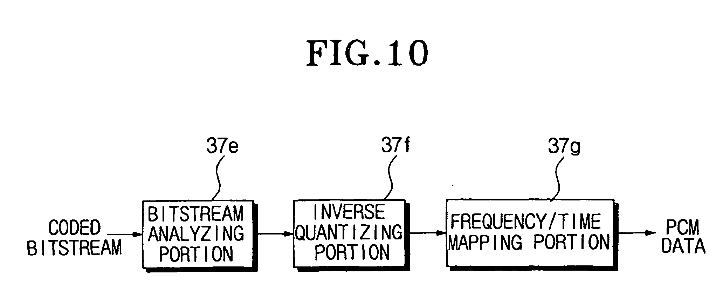

As shown in Figure 10, the decoder includes a bitstream analyzing portion 37e, an inverse quantizing portion 37f, and a frequency/time mapping portion 37g.

The bitstream analyzing portion 37e performs decoding process by an order that the respective layers are generated. Also, the bitstream analyzing portion 37e performs decoding process for the respective layers by an order of importance of the bits of the respective bitstreams.

The inverse quantizing portion 37f restores the data decoded by the bitstream analyzing portion 37e into a signal of an original magnitude.

The frequency/time mapping portion 37g converts audio signal inverse-quantized to be in a frequency domain to signal in a temporal domain.

The decoded signal is converted to analogue signal through the D/A converter and output through the output terminal 47 during playing process.

As described above, according to the audio data editing method and recording medium employing the editing method, and digital audio player of the present invention, since the audio data file can be efficiently edited at any scale, the memory capacity of the digital audio devices can be utilized more efficiently.

## Claims

1. An apparatus for playing digital audio, the apparatus comprising:
storage means (35) for storing digital audio data;
playback means (32, 41) for playing audio data stored in the storage means;
means (49, 60) for receiving audio signals;
processing means (11, 15, 16; 31, 32, 37); and
the processing means (11, 15, 16; 31, 32, 37) being configured for processing audio signals, received by the means (43, 45, 49) for receiving audio signals, to produce digital audio data in a layered format, having a selectable bitrate or file size, and store said digital audio data in the storage means (35);
**characterised in that** the processing means (11, 15, 16; 31, 32, 37) includes user input means (15; 31) for setting the said selectable bitrate or file size.

2. An apparatus according to claim 1, wherein said digital audio data is in a bit sliced arithmetic coding format.

3. An apparatus according to claim 1 or 2, wherein the means (43, 45, 49) for receiving audio signals comprises means for receiving digital audio signals and the processing means (11, 15, 16; 31, 32, 37) is configured to convert received digital audio signals, having a format other than the format employed for said digital audio data, into the format employed for said digital audio data.

4. An apparatus according to any preceding claim, wherein the processing means (11, 15, 16; 31, 32, 37) is configured to truncate received digital audio signals, having the format employed for said digital audio data, to produce said digital audio data.

5. An apparatus according to any preceding claim, wherein the means (43, 45, 49) for receiving audio signals comprises means for receiving audio signals from the Internet (70).

6. An apparatus according to any preceding claim, wherein the storage means (35) and the playback means are comprised in a portable digital audio player and the processing means (11, 15, 16) and the means for receiving audio signals are comprised in a personal computer (10).

7. A digital audio player for storing digital audio data in a memory portion, said digital audio data being in a layered format, comprising:
a controller (32) for encoding an audio signal received through an input portion (43, 45, 49) according to an adjusted data extraction rate, and storing the encoded audio data in the memory portion (35);
**characterised in that** the digital audio player comprises a key input portion (31) having a predetermined key (31a) for enabling adjustment of the data extraction rate with respect to the audio signal input through the input portion (43, 45, 49).

8. The digital audio player as set forth in claim 7, further comprising a display (33) for displaying a value indicative of an amount of free memory remaining in said memory portion (35) as determined by said controller (32).

9. The digital audio player as set forth in claim 7, wherein said predetermined key (31 a) provides, when activated by a user, a predetermined key signal to the controller (32) and said controller (32) displays a menu (18a) on a display (14), in response to said key signal, a bitrate adjustment tool for selecting a bitrate at predetermined kilobyte per second intervals and a target data size tool for selecting a target data size at predetermined kilobyte intervals, said data extraction rate being adjusted according to a selected bitrate or a selected target data size.

10. The digital audio player as set forth in claim 9, wherein said display (14) displays a value indicative of an amount of free memory remaining in said memory portion, as determined by said controller (32) in response to said key signal.

11. The digital audio player as set forth in claim 7, further comprising a bit-sliced arithmetic codec portion, wherein said controller (32) loads said bit-sliced arithmetic codec portion for encoding said audio signal received through the input portion (43, 45, 49) by a bit sliced arithmetic coding method according to the adjusted data extraction rate, and storing the encoded audio data as a file in the memory portion (35), said controller (32) further loads said bit-sliced arithmetic codec portion for decoding, by the bit sliced arithmetic coding method, the file stored in the memory portion (35) for reproducing said audio signal.

12. The digital audio player as set forth in claim 9, further comprising a bit-sliced arithmetic codec portion, wherein said controller (32) loads said bit-sliced arithmetic codec portion for encoding said audio signal received through the input portion (43, 45, 49) by a bit sliced arithmetic coding method according to the adjusted data extraction rate, and storing the encoded audio data as a file in the memory portion, said controller (32) further loads said bit-sliced arithmetic codec portion for decoding, by the bit sliced arithmetic coding method, the file stored in the memory portion (35) for reproducing said audio signal.

13. The digital audio player as set forth in claim 7, wherein said input portion (43, 45, 49) includes:
an interface (49) for supporting a bi-directional communication with a computer (60);
a microphone (43) for receiving an audio signal from a user;
an analog audio signal input terminal (45) for receiving an analog audio signal from an external source; and
analog-to-digital converter (39) for converting an audio signal received via said microphone (43) or said analog audio signal input terminal (45).

14. The digital audio player as set forth in claim 9, wherein said input portion (43, 45, 49) includes:
an interface (49) for supporting a bi-directional communication with a computer (60);
a microphone (43) for receiving an audio signal from a user;
an analog audio signal input terminal (45) for receiving an analog audio signal from an external source; and
analog-to-digital converter (39) for converting an audio signal received via said microphone (43) or said analog audio signal input terminal (45).

15. The digital audio player as set forth in claim 14, further comprising a bit-sliced arithmetic codec portion, wherein said controller (32) loads said bit-sliced arithmetic codec portion for encoding said audio signal received through the input portion (43, 45, 49) by a bit sliced arithmetic coding method according to the adjusted data extraction rate, and storing the encoded audio data as a file in the memory portion (35), said controller (32) further loads bit-sliced arithmetic codec portion (37) for decoding, by the bit-sliced arithmetic coding method, the file stored in the memory portion (35) for reproducing said audio signal.

16. The digital audio player as set forth in claim 15, wherein said controller (32) upon receipt of bitstream data formed according to a layered bit sliced arithmetic coding method and received via said interface (49), stores the received bitstream data until a bit rate layer corresponding to the selected bit rate is received, such that bit rate layers greater than the selected bit rate are discarded.

17. The digital audio player as set forth in claim 15, wherein said controller (32), upon receipt of bitstream data formed according to a layered bit sliced arithmetic coding method and received via said interface (49), stores the received bitstream data until the amount of bitstream data stored corresponds to the selected target data size, and any remaining bitstream data is discarded.

18. The digital audio player as set forth in claim 7, wherein the digital audio player is portable.

19. The digital audio player as set forth in claim 7, wherein the digital audio player is computer generated.

20. The digital audio player as set forth in claim 11, wherein the bit-sliced arithmetic codec portion (37) comprises:
a quantizing portion (37c) for quantizing input audio data for predetermined coding bands; and
a bit packing portion (37d) for generating a layered bitstream by an order of bit significance, by expressing the quantization data in a binary notion of a predetermined number of bits, coupling the data in bit unit, and encoding the data from a top bit sequence having the most significant bits to a lower bit sequence having the least significant bits.

21. The digital audio player as set forth in claim 11, wherein the bit sliced codec portion (37) comprises:
a bitstream analyzing portion for analyzing bit significance of the bits composing the bitstreams and decoding the layered bitstreams by an order of layer generation, from the most significant bit to the least significant bit;
an inverse-quantizing portion for restoring the data decoded by the bitstream analyzing portion into an original-sized signal; and
a frequency/time mapping portion (37a) for converting the audio signal in a frequency domain inversely quantized by the inverse-quantizing portion into a signal in a temporal domain.

22. The digital audio player as set forth in claim 19, wherein said key input portion (31) comprises a menu bar, and said predetermined key comprises an edit key on said menu bar.

23. The digital audio player as set forth in claim 18, further comprising a bit-sliced arithmetic codec portion (37), wherein said controller (32) loads said bit-sliced arithmetic codec portion (37) for encoding said audio signal received through the input portion (43, 45, 49) by a bit sliced arithmetic coding method according to the adjusted data extraction rate, and storing the encoded audio data as a file in the memory portion (35), said controller (32) further loads said bit-sliced arithmetic codec portion (37) for decoding, by the bit sliced arithmetic coding method, the file stored in the memory portion (35) for reproducing said audio signal.

24. The digital audio player as set forth in claim 23, wherein said controller (32), upon receipt of bitstream data formed according to a layered bit sliced arithmetic coding method and received via an interface (49), stores the received bitstream data until a bit rate layer corresponding to the selected bit rate is received, such that bit rate layers greater than the selected bit rate are discarded.

25. The digital audio player as set forth in claim 23, wherein said controller (32), upon receipt of bitstream data formed according to a layered bit sliced arithmetic coding method and received via said interface (49), stores the received bitstream data until the amount of bitstream data stored corresponds to the selected target data size, and any remaining bitstream data is discarded.

26. The digital audio player as set forth in claim 19, wherein said predetermined key (31a) provides, when activated by a user, a predetermined key signal to the controller (32) and said controller (32) displays a menu on a display, in response to said key signal, a bitrate adjustment tool for selecting a bitrate at predetermined kilobyte per second intervals and a target data size tool for selecting a target data size at predetermined kilobyte intervals, said data extraction rate being adjusted according to a selected bitrate or a selected target data size.

27. The digital audio player as set forth in claim 26, wherein said controller (32) comprises an audio editor (18) including:
a menu providing portion (18a) for providing a display showing various menus of audio editing; and
an editing portion (18b) for performing a layered bit sliced coding of the audio signal.

28. The digital audio player as set forth in claim 27, wherein said editing portion (18b) comprises a bit-sliced arithmetic codec program for encoding said audio signal received through the input portion (43, 45, 49) by a bit sliced arithmetic coding method according to the adjusted data extraction rate, and storing the encoded audio data as a file in the memory portion (35), said editing portion (18b) further loads said bit-sliced arithmetic codec program for decoding, by the bit sliced arithmetic coding method, the file stored in the memory portion (35) for reproducing said audio signal.

29. The digital audio player as set forth in claim 27, wherein said predetermined kilobyte per second intervals comprise 1 Kbps intervals.

30. The digital audio player as set forth in claim 27, wherein said predetermined kilobyte intervals comprise 1 Kbyte intervals.

31. A computer having a digital audio editor for encoding an audio signal and storing the encoded audio signal in a memory, said audio editor (18) **characterised by**: a layered bit sliced arithmetic coding method for encoding the audio signal;
a menu providing portion (18a) for providing a display showing various menus of audio editing wherein said menu providing portion (18a) displays a key input portion having a predetermined key for enabling adjustment of a data extraction rate; and
an editing portion (18b) for performing layered bit sliced coding of the audio signal according to an adjusted data extraction rate, and storing the encoded audio signal in the memory.

32. The computer as set forth in claim 31, wherein said editing portion (18b) comprises a bit-sliced arithmetic codec program for encoding said audio signal by said bit sliced arithmetic coding method according to the adjusted data extraction rate, and storing the encoded audio signal as a file in the memory, said editing portion further loads said bit-sliced arithmetic codec program for decoding, by the bit sliced arithmetic coding method, the file stored in the memory for reproducing said audio signal.

33. The computer as set forth in claim 32, wherein said predetermined key (31 a) provides, when activated by a user, a predetermined key signal to the menu providing portion (18a) and said menu providing portion (18a) displays a predetermined menu on a display screen of said computer, in response to said key signal, a bitrate adjustment tool for selecting a bitrate at predetermined kilobyte per second intervals and a target data size tool for selecting a target data size at predetermined kilobyte intervals, said data extraction rate being adjusted according to a selected bitrate or a selected target data size.

34. The computer as set forth in claim 33, wherein said predetermined kilobyte per second intervals comprise 1 Kbps intervals.

35. The computer as set forth in claim 33, wherein said predetermined kilobyte intervals comprise 1 Kbyte intervals.

36. The computer as set forth in claim 33, wherein said key input portion (31) comprises a menu bar, and said predetermined key comprises an edit key on said menu bar.

37. The computer as set forth in claim 33, wherein said menu providing portion (18a) provides a display showing a file menu (14a), said file menu (14a) comprising:
a first menu bar including said key input portion and said predetermined key comprises an edit key;
a second menu bar positioned below said first menu bar, said second menu bar including a download key (25), an upload key (26) and a play key (27);
a split screen having a left display screen and a right display screen, said left display screen displaying file folders stored in memory of said computer, said right display screen displaying files stored in a memory of a portable digital audio player when said portable digital audio player is connected to an output port of said computer;
a file size display portion for displaying a size of one of said file folder selected by a user for further processing; and
a memory size display for displaying a total memory size of said memory of said portable digital audio player and displaying a value indicative of an amount of available free memory space in said memory of said digital audio player.

38. The computer as set forth in claim 37, wherein said menu providing portion (18a) provides an edit menu (14b, 14c, 14d) as said predetermined menu displayed on said display screen when said edit key is activated by said user, said edit menu comprising:
said bitrate adjustment tool, said bitrate adjustment tool including a bitrate display for showing selectable bit rate values and bitrate scroll means for scrolling through said selectable bit rate values; and
said target data size tool, said target data size tool including a target data size display for showing selectable target data size values and target data size scroll means for scrolling through said selectable target data size values.

39. The computer as set forth in claim 38, wherein said edit menu (14b, 14c, 14d) further comprises a download after edit key for enabling said encoded audio signal to be automatically downloaded to the memory of said portable digital audio player upon completion of said layered bit sliced coding of said audio signal.

40. The computer as set forth in claim 39, wherein said edit menu further comprises an enter key and a cancel key, said enter key being activated by said user to start said layered bit sliced coding of said audio signal, and said cancel key being activated by said user to close said edit menu without editing said audio signal.

41. The computer as set forth in claim 40, wherein said edit menu (14c) further comprises a preview key for enabling the user to sample a quality of an audio signal partially encoded by said layered bit sliced coding of said audio signal according to the selected bit rate or target size prior to downloading.

42. The computer as set forth in claim 40, wherein said predetermined kilobyte per second intervals comprise 1 Kbps intervals, said edit menu (14d) further comprising:
a fine adjustment tool, said fine adjustment tool enabling said bitrate display to show selectable bit rate values in said 1 Kbps intervals; and
a coarse adjustment tool, said coarse adjustment tool enabling said bitrate display to show selectable bit rate values in 8 Kbps intervals.

43. A method of encoding an audio signal and storing the encoded audio signal in a memory, said method **characterised by** the steps of: encoding the audio signal according to a layered bit sliced arithmetic coding program;
displaying a main menu on a screen of said computer wherein said main menu includes a menu bar comprising a key input portion having a plurality of menu keys including a predetermined key for enabling adjustment of a data extraction rate;
determining whether a key signal is generated in response to activation of one of said menu keys;
determining, when it is determined that said key signal is generated, whether said key signal corresponds to said predetermined key;
determining whether a data extraction rate has been selected, when it is determined that said key signal corresponds to said predetermined key;
editing an audio signal file according to a bit-sliced arithmetic coding program at said data extraction rate, when it is determined that said data extraction rate has been selected, and outputting an encoded audio signal;
downloading said encoded audio signal to a memory of a portable digital audio player when said editing step is completed.

44. The method as set forth in claim 43, further comprising the steps of:
determining whether an automatic download function has been selected;
storing said encoded audio signal to a memory of said computer when said editing step is completed and it has been determined that said automatic download function has not been selected; and
performing said step of downloading when it is determined that said automatic download function has been selected.

## Patentansprüche

1. Gerät zum Abspielen von Digital-Audio, wobei das Gerät umfasst :
eine Speichervorrichtung (35) zum Speichern von Digital-Audiodaten;
eine Wiedergabevorrichtung (32, 41) zum Abspielen von in der Speichervorrichtung gespeicherten Audiodaten;
eine Vorrichtung (49, 60) zum Empfangen von Audiosignalen;
eine Verarbeitungsvorrichtung (11, 15, 16; 31, 32, 37); und
eine Verarbeitungsvorrichtung (11, 15, 16; 31, 32, 37), die konfiguriert ist zum Verarbeiten von Audiosignalen, die von der Vorrichtung (43, 45, 49) zum Empfangen von Audiosignalen empfangen worden sind, zum Erzeugen von Digital-Audiodaten in einem geschichteten Format, mit einer auswählbaren Bitrate oder Dateigröße, und Speichern der Digital-Audiodaten in der Speichervorrichtung (35);
**dadurch gekennzeichnet, dass** die Verarbeitungsvorrichtung (11, 15, 16; 31, 32, 37) eine Benutzereingabevorrichtung (15, 31) einschließt zum Einstellen der auswählbaren Bitrate oder Dateigröße.

2. Gerät nach Anspruch 1, wobei die Digital-Audiodaten ein bitgeteiltes arithmetisches Codierformat haben.

3. Gerät nach Anspruch 1 oder 2, wobei die Vorrichtung (43, 45, 49) zum Empfangen von Audiosignalen eine Vorrichtung umfasst zum Empfangen von Digital-Audiosignalen und die Verarbeitungsvorrichtung (11, 15, 16; 31, 32, 37) konfiguriert ist zum Umsetzen empfangener Digital-Audiosignale mit einem Format, das von dem für die Digital-Audiodaten verwendeten Format abweicht, in das Format, das für die Digital-Audiodaten verwendet wird.

4. Gerät nach einem der vorhergehenden Ansprüche, wobei die Verarbeitungsvorrichtung (11, 15, 16; 31, 32, 37) konfiguriert ist zum Beschneiden empfangener Digital-Audiosignale mit dem für die Digital-Audiodaten verwendeten Format zum Erzeugen der Digital-Audiodaten.

5. Gerät nach einem der vorhergehenden Ansprüche, wobei die Vorrichtung (43, 45, 49) zum Empfangen von Audiosignalen eine Vorrichtung umfasst zum Empfangen von Audiosignalen von dem Internet (70).

6. Gerät nach einem der vorhergehenden Ansprüche, wobei die Speichervorrichtung (35) und die Wiedergabevorrichtung in einem tragbaren Digital-Audiospieler aufgenommen sind und die Verarbeitungsvorrichtung (11, 15, 16) und die Vorrichtung zum Empfangen von Audiosignalen in einem Personalcomputer (10) aufgenommen sind.

7. Digital-Audiospieler zum Speichern von Digital-Audiodaten in einem Speicherabschnitt, wobei die Digital-Audiodaten in einem geschichteten Format vorliegen, umfassend:
einen Controller (32) zum Codieren eines über einen Eingabeabschnitt (43, 45, 49) entsprechend einer abgestimmten Datenextraktionsrate empfangener Audiosignale, und Speichern der codierten Audiodaten in dem Speicherabschnitt (35);
**dadurch gekennzeichnet, dass** der Digital-Audiospieler einen Tasteneingabeabschnitt (31) umfasst mit einer vorbestimmten Taste (31a) zum Ermöglichen des Abstimmens der Datenextraktionsrate in Bezug auf das über den Eingabeabschnitt (43, 45, 49) eingegebene Audiosignal.

8. Digital-Audiospieler nach Anspruch 7, ferner eine Anzeige (33) umfassend zum Anzeigen eines für einen Umfang des frei verbleibenden Speichers in dem Speicherabschnitt (35) indikativen Wertes wie durch den Controller (32) bestimmt.

9. Digital-Audiospieler nach Anspruch 7, wobei die vorbestimmte Taste (31a), wenn sie von einem Benutzer aktiviert wird, ein vorbestimmtes Tastensignal für den Controller (32) bereitstellt und der Controller (32) ansprechend auf das Tastensignal ein Menü (18a) an einer Anzeige (14) anzeigt, ein Bitratenabstimm-Tool zum Auswählen einer Bitrate bei vorbestimmten Kilobyte pro Sekunden-Intervallen und ein Zieldatengrößen-Tool zum Auswählen einer Zieldatengröße bei vorbestimmten Kilobyte-Intervallen, wobei die Extraktionsrate in Übereinstimmung mit einer ausgewählten Bitrate oder einer ausgewählten Zieldatengröße abgestimmt wird.

10. Digital-Audiospieler nach Anspruch 9, wobei die Anzeige (14) einen Wert anzeigt, der indikativ ist für einen Umfang freien verbleibenden Speicher in dem Speicherabschnitt, wie durch den Controller (32) ansprechend auf das Tastensignal bestimmt.

11. Digital-Audiospieler nach Anspruch 7, ferner einen bitgeteilte arithmetischen Codec-Abschnitt umfassend, wobei der Controller (32) den bitgeteilte arithmetischen Codec-Abschnitt lädt zum Codieren des über den Eingabeabschnitt (43, 45, 49) empfangenen Audiosignals durch ein bitgeteiltes arithmetisches Codierverfahren gemäß der abgestimmten Datenextraktionsrate, und zum Speichern der codierten Audiodaten als eine Datei in dem Speicherabschnitt (35), wobei der Controller (32) ferner den bitgeteilte arithmetischen Codec-Abschnitt lädt zum Decodieren der in dem Speicherabschnitt (35) gespeicherten Datei durch das bitgeteilte arithmetische Codierverfahren zum Reproduzieren des Audiosignals.

12. Digital-Audiospieler nach Anspruch 9, ferner einen bitgeteilte arithmetischen Codec-Abschnitt umfassend, wobei der Controller (32) den bitgeteilte arithmetischen Codec-Abschnitt lädt zum Codieren des über den Eingabeabschnitt (43, 45, 49) empfangenen Audiosignals durch ein bitgeteiltes arithmetisches Codierverfahren gemäß der abgestimmten Datenextraktionsrate, und zum Speichern der codierten Audiodaten als eine Datei in dem Speicherabschnitt, wobei der Controller (32) ferner den bitgeteilte arithmetischen Codier-Abschnitt lädt zum Decodieren der in dem Speicherabschnitt (35) gespeicherten Datei durch das bitgeteilte arithmetische Codierverfahren zum Reproduzieren des Audiosignals.

13. Digital-Audiospieler nach Anspruch 7, wobei der Eingabeabschnitt (43, 45, 49) einschließt:
eine Schnittstelle (49) zum Unterstützen einer bidirektionalen Kommunikation mit einem Computer (60);
ein Mikrofon (43) zum Empfangen eines Audiosignals von einem Benutzer;
einen Analog-Audiosignaleingangsanschluss (45) zum Empfangen eines Analog-Audiosignals von einer externen Quelle; und
einen Analog-zu-Digitalumsetzer (39) zum Umsetzen eines über das Mikrofon (43) oder den Analog-Audiosignaleingangsanschluss (45) empfangenen Audiosignals.

14. Digital Audiospieler nach Anspruch 9, wobei der Eingabeabschnitt (43, 45, 49) einschließt:
einen Schnittstelle (49) zum Unterstützen einer bidirektionalen Kommunikation mit einem Computer (60);
ein Mikrofon (43) zum Empfangen eines Audiosignals von einem Benutzer;
einen Analog-Audiosignaleingabeanschluss (45) zum Empfangen eines Analog-Audiosignals von einer externen Quelle; und
einen Analog-zu-Digitalumsetzer (39) zum Umsetzen eines über das Mikrofon (43) oder den Analog-Audiosignaleingabeanschluss (45) empfangenen Audiosignals.

15. Digital-Audiospieler nach Anspruch 14, ferner einen bitgeteilte arithmetischen Codec-Abschnitt umfassend, wobei der Controller (32) den bitgeteilte arithmetischen Codec-Abschnitt lädt zum Codieren des von dem Eingangsabschnitt (43, 45, 49) empfangenen Audiosignals durch ein bitgeteiltes arithmetisches Codierverfahren gemäß der abgestimmten Datenextraktionsrate, und zum Speichern der codierten Audiodaten als eine Datei in dem Speicherabschnitt (35), wobei der Controller (32) ferner den arithmetischen Bitratencodec-Abschnitt (37) lädt zum Decodieren der in dem Speicherabschnitt (35) gespeicherten Datei durch das bitgeteilte arithmetische Codierverfahren zum Reproduzieren des Audiosignals.

16. Digital-Audiospieler nach Anspruch 15, wobei der Controller (32) auf dem Empfang eines in Übereinstimmung mit einem geschichteten bitgeteilte arithmetischen Codierverfahren gebildeten und über die Schnittstelle (49) empfangenen Bitstroms hin, die empfangenen Bitstromdaten speichert bis eine Bitratenschicht entsprechend der ausgewählten Bitrate empfangen wird, derart, dass Bitratenschichten, die größer sind als die ausgewählte Bitrate, verworfen werden.

17. Digital-Audiospieler nach Anspruch 15, wobei der Controller (32) auf dem Empfang von in Übereinstimmung mit einem geschichteten bitgeteilte arithmetischen Codierverfahren gebildeten und über die Schnittstelle (49) empfangenen Bitstroms, die empfangenen Bitstromdaten speichert bis der Umfang der gespeicherten Bitstromdaten der ausgewählten Zieldatengröße entspricht, und irgendwelche verbleibenden Bitstromdaten verworfen werden.

18. Digital-Audiospieler nach Anspruch 7, wobei der Digital-Audiospieler tragbar ist.

19. Digital-Audiospieler nach Anspruch 7, wobei der Digital-Audiospieler computererzeugt wird.

20. Digital-Audiospieler nach Anspruch 11, wobei der bitgeteilte arithmetische Codec-Abschnitt (37) umfasst:
einen Quantisierabschnitt (37c) zum Quantisieren von eingegebenen Audiodaten für vorbestimmte Codierbänder; und
einen Bitpackabschnitt (37d) zum Erzeugen eines geschichteten Bitstroms durch eine Reihenfolge von Bitsignifikanz, durch Ausdrücken der Quantisierungsdaten in einem Binärausdruck einer vorbestimmten Anzahl von Bits, Koppeln der Daten in Biteinheit und Codieren der Daten von einer oberen Bitfolge mit den signifikantesten Bits zu einer niederen Bitfolge mit den am wenigsten signifikanten Bits.

21. Digital-Audiospieler nach Anspruch 11, wobei der bitgeteilte Codec-Abschnitt (37) umfasst:
einen Bitstromanalyseabschnitt zum Analysieren von Bitsignifikanz der den Bitstrom bildenden Bits und Decodieren der geschichteten Bitströme durch eine Reihenfolge der Schichterzeugung, von dem signifikantesten Bit zu dem am wenigsten signifikanten Bit;
einen Umkehrquantisierungsabschnitt zum Neuspeichern der durch den Bitstromanalyseabschnitt decodierten Daten in ein Ursprungsgrößensignal; und
einen Frequenz-/Zeitabbildungsabschnitt (37a) zum Umsetzen des Audiosignals in einem umkehr-quantisierten Frequenzbereich durch den Umkehrquantisierungsabschnitt in ein Signal in einem Zeitbereich.

22. Digital-Audiospieler nach Anspruch 19, wobei der Tasteneingabeabschnitt (31) eine Menüleiste umfasst, und die vorbestimmte Taste einer Eingabetaste auf der Menüleiste umfasst.

23. Digital-Audiospieler nach Anspruch 18, ferner einen bitgeteilte arithmetischen Codec-Abschnitt (37) umfassend, wobei der Controller (32) den bitgeteilte arithmetischen Codec-Abschnitt (37) zum Codieren des durch den Eingabeabschnitt (43, 45, 49) empfangenen Audiosignals durch ein bitgeteiltes arithmetisches Codierverfahren gemäß der abgestimmten Datenextraktionsrate lädt, und zum Speichern der codierten Audiodaten als eine Datei in dem Speicherabschnitt (35), wobei der Controller (32) ferner den bitgeteilte arithmetischen Codec-Abschnitt (37) zum Decodieren der in dem Speicherabschnitt (35) gespeicherten Datei durch das bitgeteilte arithmetische Codierverfahren lädt zum Reproduzieren des Audiosignals.

24. Digital-Audiospieler nach Anspruch 23, wobei der Controller (32) auf den Empfang von in Übereinstimmung mit einem geschichteten bitgeteilte arithmetischen Codierverfahren gebildeten und über eine Schnittstelle (49) empfangenen Bitstroms hin die empfangenen Bitstromdaten speichert bis eine Bitratenschicht entsprechend der ausgewählten Bitrate empfangen wird, derart, dass Bitratenschichten, die größer sind als die ausgewählte Bitrate, verworfen werden.

25. Digital-Audiospieler nach Anspruch 23, wobei der Controller (32) auf den Empfang von in Übereinstimmung mit einem geschichteten bitgeteilte arithmetischen Codierverfahren gebildeten und über die Schnittstelle (49) empfangenen Bitstroms hin die empfangenen Bitstromdaten speichert bis der Umfang an gespeicherten Bitstromdaten der ausgewählten Zieldatengröße entspricht, und irgendwelche verbleibenden Bitstromdaten verworfen werden.

26. Digital-Audiospieler nach Anspruch 19, wobei die vorbestimmte Taste (31a) wenn sie von einem Benutzer aktiviert wird, ein vorbestimmtes Tastensignal für den Controller (32) bereitstellt und der Controller (32) ansprechend auf das Tastensignal ein Menü auf einer Anzeige anzeigt, ein Bitratenabstimm-Tool zum Auswählen einer Bitrate bei vorbestimmten Kilobyte-pro-Sekunden-Intervallen und ein Zieldatengrößen-Tool zum Auswählen einer Zieldatengröße bei vorbestimmten Kilobyte-Intervallen, wobei die Datenextraktionsrate in Übereinstimmung mit einer ausgewählten Bitrate oder einer ausgewählten Zieldatengröße abgestimmt wird.

27. Digital-Audiospieler nach Anspruch 26, wobei der Controller (32) eine Audio-Editiervorrichtung (18) umfasst, die einschließt:
einen Menübereitstellungsabschnitt (18a) zum Bereitstellen einer verschiedene Menüs und Audio-Editierungen zeigenden Anzeige; und
einen Editierabschnitt (18b) zum Vornehmen einer geschichteten bitgeteilten Codierung des Audiosignals.

28. Digital-Audiospieler nach Anspruch 27, wobei der Editierabschnitt (18b) ein bitgeteiltes arithmetisches Codec-Programm umfasst zum Codieren des durch den Eingabeabschnitt (43, 45, 49) empfangenen Audiosignals durch ein bitgeteiltes arithmetisches Codierverfahren in Übereinstimmung mit der abgestimmten Datenextraktionsrate, und Speichern der codierten Audiodaten als eine Datei in dem Speicherabschnitt (35), wobei der Editierabschnitt (18b) ferner das bitgeteilte arithmetische Codierprogramm lädt zum Decodieren der in dem Speicherabschnitt (35) gespeicherten Datei durch das bitgeteilte arithmetische Codierverfahren zum Reproduzieren des Audiosignals.

29. Digital-Audiospieler nach Anspruch 27, wobei die vorbestimmten Kilobyte pro Sekunden-Intervalle 1 Kilobyte pro Sekunden-Intervalle umfassen.

30. Digital-Audiospieler nach Anspruch 27, wobei die vorbestimmten Kilobyte-Intervalle 1 Kilobyte-Intervalle umfassen.

31. Computer mit einer Digital-Audioeditiervorrichtung zum Codieren eines Audiosignals und Speichern des codierten Audiosignals in einem Speicher, wobei die Audioeditiervorrichtung (18) **gekennzeichnet ist durch**:
ein geschichtetes bitgeteiltes arithmetisches Codierverfahren zum Codieren des Audiosignals;
einen Menübereitstellungsabschnitt (18a) zum Bereitstellen einer verschiedene Menüs der Audioeditierung zeigenden Anzeige, wobei der Menübereitstellungsabschnitt (18a) einen Tasteneingabeabschnitt mit einer vorbestimmten Taste zum Ermöglichen des Abstimmens einer Datenextraktionsrate anzeigt; und
einen Editierabschnitt (18b) zum Vornehmen geschichteter bitgeteilter Codierung des Audiosignals in Übereinstimmung mit einem abgestimmten Datenextraktionsrate, und Speichern des codierten Audiosignals in dem Speicher.

32. Computer nach Anspruch 31, wobei der Editierabschnitt (18b) ein bitgeteiltes arithmetisches Codec-Programm umfasst zum Codieren des Audiosignals in Übereinstimmung mit der abgestimmten Datenextraktionsrate durch das bitgeteilte arithmetische Codierverfahren, wobei der Editierabschnitt ferner das bitgeteilte arithmetische Codec-Programm lädt zum Codieren der in dem Speicher gespeicherten Datei durch das bitgeteilte arithmetische Codierverfahren zum Reproduzieren des Audiosignals.

33. Computer nach Anspruch 32, wobei die vorbestimmte Taste (31a), wenn sie von einem Benutzer aktiviert wird, ein vorbestimmtes Tastensignal für den Menübereitstellungsabschnitt (18a) bereitstellt und der Menübereitstellungsabschnitt (18a) ansprechend auf das Tastensignal ein vorbestimmtes Menü auf einem Anzeigeschirm des Computers anzeigt, ein Bitratenabstimm-Tool zum Auswählen einer Bitrate bei vorbestimmten Kilobyte pro Sekunden-Intervallen, und ein Zieldatengrößen-Tool zum Auswählen einer Zieldatengröße bei vorbestimmten Kilobyte-Intervallen, wobei die Datenextraktionsrate in Übereinstimmung mit einer ausgewählten Bitrate oder einer ausgewählten Zieldatengröße abgestimmt wird.

34. Computer nach Anspruch 33, wobei die vorbestimmten Kilobyte-pro-Sekunden-Intervalle 1-Kilobyte-pro-Sekunden-Intervalle umfassen.

35. Computer nach Anspruch 33, wobei die vorbestimmten Kilobyte-Intervalle 1 Kilobyte-Intervalle umfassen.

36. Computer nach Anspruch 33, wobei der Tasteneingabeabschnitt (31) eine Menüleiste umfasst, und die vorbestimmte Taste eine Editiertaste auf der Menüleiste umfasst.

37. Computer nach Anspruch 33, wobei der Menübereitstellungsabschnitt (18a) eine Anzeige bereitstellt, die ein Dateimenü (14a) zeigt, wobei das Dateimenü (14a) umfasst:
eine erste Menüleiste einschließlich einem Tasteneingabeabschnitt und der eine Editiertaste umfassenden vorbestimmten Taste;
eine unterhalb der ersten Menüleiste positionierte zweite Menüleiste, wobei die zweite Menüleiste eine Herunterlad-Taste (25) umfasst, eine Hochlad-Taste (26) und eine Abspieltaste (27);
einen Aufspaltbildschirm mit einem linken Anzeigeschirm und einem rechten Anzeigeschirm, wobei der linke Anzeigeschirm Dateiordner anzeigt, die in dem Speicher des Computers gespeichert sind, der rechte Anzeigeschirm Dateien anzeigt, die in einem Speicher eines tragbaren Digital-Audiospielers gespeichert sind, wenn der tragbare Digital-Audiospieler mit einem Ausgangsanschluss des Computers verbunden ist;
einen Dateigrößenanzeigeabschnitt zum Anzeigen einer Größe eines der durch einen Benutzer zur weiteren Verarbeitung ausgewählten Dateiordner; und
eine Speichergrößenanzeige zum Anzeigen einer Gesamtspeichergröße des Speichers des tragbaren Digital-Audiospielers und zum Anzeigen eines Wertes, der indikativ ist für einen Umfang verfügbaren freien Speicherplatzes in dem Speicher des Digital-Audiospielers.

38. Computer nach Anspruch 37, wobei der Menübereitstellungsabschnitt (18a) ein Editiermenü (14b, 14c, 14d) als das auf dem Anzeigeschirm angezeigte vorbestimmte Menü bereitstellt, wenn die Editiertaste durch den Benutzer aktiviert wird, wobei das Editiermenü umfasst:
das Bitratenabstimm-Tool, wobei das Bitratenabstimm-Tool eine Bitratenanzeige einschließt zum Zeigen auswählbarer Bitratenwerte und eine Bitratendurchblättervorrichtung zum Blättern durch die auswählbaren Bitratenwerte; und
ein Zieldatengrößen-Tool, wobei das Zieldatengrößen-Tool eine Zieldatengrößenanzeige einschließt zum Zeigen auswählbarer Zieldatengrößenwerte und eine Zieldatengrößendurchblättervorrichtung zum Blättern durch die auswählbaren Zieldatengrößenwerte.

39. Computer nach Anspruch 38, wobei das Editiermenü (14b, 14c, 14d) ferner eine Herunterladen-nach-Editierung-Taste umfasst, um das automatische Herunterladen des codierten Audiosignals in den Speicher des tragbaren Digital-Audiospielers auf das Abschließen der geschichteten bitgeteilten Codierung des Audiosignals hin zu ermöglichen.

40. Computer nach Anspruch 39, wobei das Editiermenü ferner eine Eingabetaste und eine Abbruchtaste umfasst, wobei die Eingabetaste durch den Benutzer aktiviert wird zum Starten der geschichteten bitgeteilten Codierung des Audiosignals, und die Abbruchtaste durch den Benutzer aktiviert wird zum Schließen des Editiermenüs ohne Editieren des Audiosignals.

41. Computer nach Anspruch 40, wobei das Editiermenü (14c) ferner eine Vorschau-Taste umfasst, um es.dem Benutzer zu ermöglichen, eine Probe einer Qualität eines teilweise durch die geschichtete bitgeteilte Codierung entsprechend der ausgewählten Bitrate oder Zielgröße codierten Audiosignals vor dem Herunterladen zu erzeugen.

42. Computer nach Anspruch 40, wobei die vorbestimmten Kilobyte-pro-Sekunden-Intervalle 1-Kilobyte-pro-Sekunden-Intervalle umfassend, und das Editiermenü (14b) ferner umfasst:
ein Feinabstimm-Tool, wobei das Feinabstimm-Tool die Bitratenanzeige ermöglicht zum Zeigen auswählbarer Bitratenwerte in den 1-Kilobyte-pro-Sekunden-Intervallen; und
ein Grobabstimm-Tool, wobei das Grobabstimm-Tool die Bitratenanzeige zum Zeigen auswählbarer Bitratenwerte in 8-Kilobyte-pro-Sekunden-Intervallen ermöglicht.

43. Verfahren zum Codieren eines Audiosignals und Speichern des codierten Audiosignals in einem Speicher, wobei das Verfahren **gekennzeichnet ist durch** die Schritte:
Codieren des Audiosignals gemäß einem geschichteten bitgeteilte arithmetischen Codierprogramm;
Anzeigen eines Hauptmenüs auf einem Schirm des Computers, wobei das Hauptmenü eine Menüleiste einschließt, die einen Tasteneingabeabschnitt mit einer Vielzahl von Menütasten einschließlich einer vorbestimmten Taste zum Ermöglichen der Abstimmung der Datenextraktionsrate umfasst;
Bestimmen, ob ansprechend auf das Aktivieren einer der Menütasten ein Tastensignal erzeugt wird;
Bestimmen, wenn bestimmt wird, dass ein Tastensignal erzeugt wird, ob das Tastensignal einer vorbestimmten Taste entspricht;
Bestimmen, ob eine Datenextraktionsrate ausgewählt worden ist, wenn bestimmt wird, dass das Tastensignal der vorbestimmten Taste entspricht;
Editieren einer Audiosignaldatei in Übereinstimmung mit einem bitgeteilte arithmetischen Codierprogramm bei der Datenextraktionsrate, wenn bestimmt wird, dass die Datenextraktionsrate ausgewählt worden ist, und Ausgeben des codierten Audiosignals;
Herunterladen des codierten Audiosignals in einen Speicher eines tragbaren Digital-Audiospielers, wenn der Editierschritt abgeschlossen ist.

44. Verfahren nach Anspruch 43, ferner die Schritte umfassend:
Bestimmen, ob eine automatische Herunterladefunktion ausgewählt worden ist;
Speichern des codierten Audiosignals in einen Speicher de Computers, wenn der Editierschritt abgeschlossen ist und es bestimmt worden ist, dass die automatische Herunterladefunktion nicht ausgewählt worden ist; und
Vornehmen des Schrittes des Herunterladens, wenn bestimmt wird, dass die automatische Herunterladefunktion ausgewählt worden ist.

## Revendications

1. Appareil de lecture audio numérique, l'appareil comprenant
des moyens de stockage (35) pour stocker des données audio numériques ;
des moyens de lecture (32, 41) pour lire des données audio stockées dans les moyens de stockage ;
des moyens de réception de signaux audio (49, 60) ;
des moyens de traitement (11, 15, 16 ; 31, 32, 37) ; et
les moyens de traitement (11, 15, 16; 31, 32, 37) étant configurés pour traiter des signaux audio reçus par les moyens de réception de signaux audio (43, 45, 49) afin de produire des données audio numériques dans un format en couches ayant un débit binaire ou une taille de fichier sélectables et stocker lesdites données audio numériques dans les moyens de stockage (35) ;
**caractérisé en ce que** les moyens de traitement (11, 15, 16 ; 31, 32, 37) comprennent des moyens d'entrée par l'utilisateur (15 ; 31) pour fixer ledit débit binaire ou ladite taille de fichier sélectables.

2. Appareil selon la revendication 1, dans lequel lesdites données audio numériques sont dans un format de codage arithmétique par tranches binaires.

3. Appareil selon la revendication 1 ou la revendication 2, dans lequel les moyens de réception de signaux audio (43, 45, 49) comprennent des moyens pour recevoir des signaux audio numériques et les moyens de traitement (11, 15, 16 ; 31, 32, 37) sont configurés pour convertir des signaux audio numériques reçus ayant un format autre que le format employé pour lesdites données audio numériques au format employé pour lesdites données audio numériques.

4. Appareil selon l'une quelconque des revendications précédentes, dans lequel les moyens de traitement (11, 15, 16; 31, 32, 37) sont configurés pour tronquer des signaux audio numériques reçus ayant le format employé pour lesdites données audio numériques afin de produire lesdites données audio numériques.

5. Appareil selon l'une quelconque des revendications précédentes, dans lequel les moyens de réception de signaux audio (43, 45, 49) comprennent des moyens pour recevoir des signaux audio à partir de l'Internet (70).

6. Appareil selon l'une quelconque des revendications précédentes, dans lequel les moyens de stockage (35) et les moyens de lecture sont compris dans un lecteur audio numérique portable et les moyens de traitement (11, 15, 16) et les moyens de réception de signaux audio sont compris dans un ordinateur personnel (10).

7. Lecteur audio numérique pour stocker des données audio numériques dans une partie de mémoire, lesdites données audio numériques étant dans un format en couches, comprenant :
un contrôleur (32) pour coder un signal audio reçu par l'intermédiaire d'une partie d'entrée (43, 45, 49) en fonction d'un débit d'extraction de données ajusté et pour stocker les données audio codées dans la partie de mémoire (35) ;
**caractérisé en ce que** le lecteur audio numérique comprend une partie d'entrée par touche (31) ayant une touche prédéterminée (31a) pour permettre l'ajustement du débit d'extraction de données par rapport à l'entrée de signal audio par l'intermédiaire de la partie d'entrée (43, 45, 49).

8. Lecteur audio numérique selon la revendication 7, comprenant en plus un affichage (33) pour afficher une valeur indiquant une quantité de mémoire libre restante dans ladite partie de mémoire (35) telle que déterminée par ledit contrôleur (32).

9. Lecteur audio numérique selon la revendication 7, dans lequel ladite touche prédéterminée (31a) délivre, lorsqu'elle est activée par un utilisateur, un signal de touche prédéterminé au contrôleur (32) et ledit contrôleur (32) affiche un menu (18a) sur un affichage (14) en réponse audit signal de touche, un outil d'ajustement du débit binaire pour choisir un débit binaire à des intervalles prédéterminés en kilooctets par seconde et un outil de taille de données ciblé pour choisir une taille de données cible à des intervalles prédéterminés en kilooctets, ledit débit d'extraction de données étant ajusté en fonction d'un débit binaire choisi ou d'une taille de données cible choisie.

10. Lecteur audio numérique selon la revendication 9, dans lequel ledit affichage (14) affiche une valeur indiquant une quantité de mémoire libre restante dans ladite partie de mémoire, telle que déterminée par ledit contrôleur (32), en réponse audit signal de touche.

11. Lecteur audio numérique selon la revendication 7, comprenant en plus une partie de codec arithmétique à tranches binaires, dans lequel ledit contrôleur (32) charge ladite partie de codec arithmétique à tranches binaires pour coder ledit signal audio reçu par l'intermédiaire de la partie d'entrée (43, 45, 49) par une méthode de codage arithmétique par tranches binaires en fonction du débit d'extraction de données ajusté et pour stocker les données audio codées sous la forme d'un fichier dans la partie de mémoire (35), ledit contrôleur (32) charge également ladite partie de codec arithmétique à tranches binaires pour décoder, par la méthode de codage arithmétique par tranches binaires, le fichier stocké dans la partie de mémoire (35) afin de reproduire ledit signal audio.

12. Lecteur audio numérique selon la revendication 9, comprenant en plus une partie de codec arithmétique à tranches binaires, dans lequel ledit contrôleur (32) charge ladite partie de codec arithmétique à tranches binaires pour coder ledit signal audio reçu par l'intermédiaire de la partie d'entrée (43, 45, 49) par une méthode de codage arithmétique par tranches binaires en fonction du débit d'extraction de données ajusté et pour stocker les données audio codées sous la forme d'un fichier dans la partie de mémoire, ledit contrôleur (32) charge également ladite partie de codec arithmétique à tranches binaires pour décoder, par la méthode de codage arithmétique par tranches binaires, le fichier stocké dans la partie de mémoire (35) afin de reproduire ledit signal audio.

13. Lecteur audio numérique selon la revendication 7, dans lequel ladite partie d'entrée (43, 45,49) comprend :
une interface (49) destinée à permettre une communication bidirectionnelle avec un ordinateur (60) ;
un microphone (43) pour recevoir un signal audio à partir d'un utilisateur ;
une borne d'entrée de signal audio analogique (45) pour recevoir un signal audio analogique à partir d'une source externe ; et
un convertisseur analogique/numérique (39) pour convertir un signal audio reçu par l'intermédiaire dudit microphone (43) ou de ladite borne d'entrée de signal audio analogique (45).

14. Lecteur audio numérique selon la revendication 9, dans lequel ladite partie d'entrée (43, 45, 49) comprend :
une interface (49) destinée à permettre une communication bidirectionnelle avec un ordinateur (60) ;
un microphone (43) pour recevoir un signal audio à partir d'un utilisateur ;
une borne d'entrée de signal audio analogique (45) pour recevoir un signal audio analogique à partir d'une source externe ; et
un convertisseur analogique/numérique (39) pour convertir un signal audio reçu par l'intermédiaire dudit microphone (43) ou de ladite borne d'entrée de signal audio analogique (45).

15. Lecteur audio numérique selon la revendication 14, comprenant en plus une partie de codec arithmétique à tranches binaires, dans lequel ledit contrôleur (32) charge ladite partie de codec arithmétique à tranches binaires pour coder ledit signal audio reçu par l'intermédiaire de la partie d'entrée (43, 45, 49) par une méthode de codage arithmétique par tranches binaires en fonction du débit d'extraction de données ajusté et pour stocker les données audio codées sous la forme d'un fichier dans la partie de mémoire (35), ledit contrôleur (32) charge également une partie de codec arithmétique à tranches binaires (37) pour décoder, par la méthode de codage arithmétique par tranches binaires, le fichier stocké dans la partie de mémoire (35) afin de reproduire ledit signal audio.

16. Lecteur audio numérique selon la revendication 15, dans lequel ledit contrôleur (32), lors de la réception de données de train de bits formées selon une méthode de codage arithmétique par tranches binaires en couches et reçues par l'intermédiaire de ladite interface (49), stocke les données de train de bits reçues jusqu'à ce qu'une couche de débit binaire correspondant au débit binaire choisi soit reçue, de sorte que des couches de débit binaire supérieures au débit binaire choisi sont éliminées.

17. Lecteur audio numérique selon la revendication 15, dans lequel ledit contrôleur (32), lors de la réception de données de train de bits formées selon une méthode de codage arithmétique par tranches binaires en couches et reçues par l'intermédiaire de ladite interface (49), stocke les données de train de bits reçues jusqu'à ce que la quantité de données de train de bits stockées corresponde à la taille de données cible choisie et que l'une quelconque des données de train de bits restantes soit éliminée.

18. Lecteur audio numérique selon la revendication 7, dans lequel le lecteur audio numérique est portable.

19. Lecteur audio numérique selon la revendication 7, dans lequel le lecteur audio numérique est généré informatiquement.

20. Lecteur audio numérique selon la revendication 11, dans lequel la partie de codec arithmétique à tranches binaires (37) comprend :
une partie de quantification (37c) pour quantifier les données audio d'entrées pour des bandes de codage prédéterminées ; et
une partie de compression binaire (37d) pour générer un train de bits en couches par ordre de train de bits, en exprimant les données de quantification selon une notation binaire d'un nombre de bits prédéterminé, en couplant les données dans une unité binaire et en codant les données depuis une séquence binaire supérieure ayant les bits de poids fort jusqu'à une séquence binaire inférieure ayant les bits de poids faible.

21. Lecteur audio numérique selon la revendication 11, dans lequel la partie d'entrée à tranches binaires (37) comprend :
une partie d'analyse de train de bits pour analyser le poids binaire des bits composant les trains de bits et décoder les trains de bits en couches par ordre de génération de couches depuis le bit de poids fort jusqu'au bit de poids faible ;
une partie de quantification inverse pour restaurer les données décodées par la partie d'analyse de train de bits en un signal de taille originelle ; et
une partie de mappage fréquence/temps (37a) pour convertir le signal audio dans un domaine de fréquence inversement quantifié par la partie de quantification inverse en un signal dans un domaine temporel.

22. Lecteur audio numérique selon la revendication 19, dans lequel ladite partie d'entrée par touche (31) comprend une barre de menu et ladite touche prédéterminée comprend une touche Edition sur ladite barre de menu.

23. Lecteur audio numérique selon la revendication 18, comprenant en plus une partie de codec arithmétique à tranches binaires (37), dans lequel ledit contrôleur (32) charge ladite partie de codec arithmétique à tranches binaires (37) pour coder ledit signal audio reçu par l'intermédiaire de la partie d'entrée (43, 45, 49) par une méthode de codage arithmétique par tranches binaires en fonction du débit d'extraction de données ajusté et pour stocker les données audio codées sous la forme d'un fichier dans la partie de mémoire (35), ledit contrôleur (32) charge également ladite partie de codec arithmétique à tranches binaires (37) pour décoder, par la méthode de codage arithmétique par tranches binaires, le fichier stocké dans la partie de mémoire (35) afin de reproduire ledit signal audio.

24. Lecteur audio numérique selon la revendication 23, dans lequel ledit contrôleur (32), lors de la réception de données de train de bits formées selon une méthode de codage arithmétique par tranches binaires en couches et reçues par l'intermédiaire d'une interface (49), stocke les données de train de bits reçues jusqu'à ce qu'une couche de débit binaire correspondant au débit binaire choisi soit reçue, de sorte que des couches de débit binaire supérieures au débit binaire choisi sont éliminées.

25. Lecteur audio numérique selon la revendication 23, dans lequel ledit contrôleur (32), lors de la réception de données de train de bits formées selon une méthode de codage arithmétique par tranches binaires en couches et reçues par l'intermédiaire de ladite interface (49), stocke les données de train de bits reçues jusqu'à ce que la quantité de données de train de bits stockées corresponde à la taille de données cible choisie et que l'une quelconque des données de train de bits restantes soit éliminée.

26. Lecteur audio numérique selon la revendication 19, dans lequel ladite touche prédéterminée (31a) délivre, lorsqu'elle est activée par un utilisateur, un signal de touche prédéterminé au contrôleur (32) et ledit contrôleur (32) affiche un menu sur un affichage en réponse audit signal de touche, un outil d'ajustement du débit binaire pour choisir un débit binaire à des intervalles prédéterminés en kilooctets par seconde et un outil de taille de données cible pour choisir une taille de données cible à des intenalles en kilooctets prédéterminés, ledit débit d'extraction de données étant ajusté en fonction d'un débit binaire choisi ou d'une taille de données cible choisie.

27. Lecteur audio numérique selon la revendication 26, dans lequel ledit contrôleur (32) comprend un éditeur audio (18) comprenant :
une partie de présentation de menu (18a) pour présenter un affichage montrant différents menus d'édition audio ; et
une partie d'édition (18b) pour effectuer un codage en couches par tranches binaires du signal audio.

28. Lecteur audio numérique selon la revendication 27, dans lequel ladite partie d'édition (18b) comprend un programme de codec arithmétique à tranches binaires pour coder ledit signal audio reçu par la partie d'entrée (43, 45, 49) par une méthode de codage arithmétique par tranches binaires en fonction du débit d'extraction de données ajusté et pour stocker les données audio codées sous la forme d'un fichier dans la partie de mémoire (35), ladite partie d'édition (18b) charge également ledit programme de codec arithmétique à tranches binaires pour décoder, par la méthode de codage arithmétique par tranches binaires, le fichier stocké dans la partie de mémoire (35) afin de reproduire ledit signal audio.

29. Lecteur audio numérique selon la revendication 27, dans lequel lesdits intervalles prédéterminés en kilooctets par seconde comprennent des intervalles de 1 kbps.

30. Lecteur audio numérique selon la revendication 27, dans lequel lesdits intervalles prédéterminés en kilooctets comprennent des intervalles de 1 kilooctet.

31. Ordinateur ayant un éditeur audio numérique pour coder un signal audio et stocker le signal audio codé dans une mémoire, ledit éditeur audio (18) étant **caractérisé par** :
une méthode de codage arithmétique par tranches binaires en couches pour coder le signal audio ;
une partie de présentation de menu (18a) pour présenter un affichage montrant différents menus d'édition audio, dans laquelle ladite partie de présentation de menu (18a) affiche une partie d'entrée par touche ayant une touche prédéterminée pour permettre l'ajustement d'un débit d'extraction de données ; et
une partie d'édition (18b) pour effectuer un codage en couches par tranches binaires du signal audio en fonction d'un débit d'extraction de données ajusté et pour stocker le signal audio codé dans la mémoire.

32. Ordinateur selon la revendication 31, dans lequel ladite partie d'édition (18b) comprend un programme de codec arithmétique à tranches binaires pour coder ledit signal audio par ladite méthode de codage arithmétique par tranches binaires en fonction du débit d'extraction de données ajusté et pour stocker le signal audio codé sous la forme d'un fichier dans la mémoire, ladite partie d'édition charge également ledit programme de codec arithmétique à tranchés binaires pour décoder, par la méthode de codage arithmétique par tranches binaires, le fichier stocké dans la mémoire afin de reproduire ledit signal audio.

33. Ordinateur selon la revendication 32, dans lequel ladite touche prédéterminée (31a) délivre, lorsqu'elle est activée par un utilisateur, un signal de touche prédéterminé à la partie de présentation de menu (18a) et ladite partie de présentation de menu (18a) affiche un menu prédéterminé sur un écran d'affichage dudit ordinateur en réponse audit signal de touche, un outil d'ajustement du débit binaire pour choisir un débit binaire à des intervalles prédéterminés en kilooctets par seconde et un outil de taille de données cible pour choisir une taille de données cible à des intervalles prédéterminés en kilooctets, ledit débit d'extraction de données étant ajusté en fonction d'un débit binaire choisi ou d'une taille de données cible choisie.

34. Ordinateur selon la revendication 33, dans lequel lesdits intervalles prédéterminés en kilooctets par seconde comprennent des intervalles de 1 kbps.

35. Ordinateur selon la revendication 33, dans lequel lesdits intervalles prédéterminés en kilooctets comprennent des intervalles de 1 kilooctet.

36. Ordinateur selon la revendication 33, dans lequel ladite partie d'entrée par touche (31) comprend une barre de menu et ladite touche prédéterminée comprend une touche Edition sur ladite barre de menu.

37. Ordinateur selon la revendication 33, dans lequel ladite partie de présentation de menu (18a) présente un affichage montrant un fichier menu (14a), ledit fichier menu (14a) comprenant :
une première barre de menu comprenant ladite partie d'entrée par touche et ladite touche prédéterminée comprend une touche Edition ;
une deuxième barre de menu positionnée en dessous de ladite première barre de menu, ladite deuxième barre de menu comprenant une touche Importation (25), une touche Exportation (26) et une touche Lecture (27) ;
un écran partagé ayant un écran d'affichage gauche et un écran d'affichage droit, ledit écran d'affichage gauche affichant des dossiers de fichiers stockés dans la mémoire dudit ordinateur, ledit écran d'affichage droit affichant des fichiers stockés dans une mémoire d'un lecteur audio numérique portable lorsque ledit lecteur audio numérique portable est relié à un port de sortie dudit ordinateur ;
une partie d'affichage de taille de fichier pour afficher une taille de l'un desdits dossiers de fichiers choisis par un utilisateur en vue de le retraiter ; et
un affichage de taille de mémoire pour afficher une taille de mémoire totale de ladite mémoire dudit lecteur audio numérique portable et afficher une valeur indiquant une quantité d'espace de mémoire libre disponible dans ladite mémoire dudit lecteur audio numérique.

38. Ordinateur selon la revendication 37, dans lequel ladite partie de présentation de menu (18a) présente un menu Edition (14b, 14c, 14d) en tant que ledit menu prédéterminé affiché sur ledit écran d'affichage lorsque ladite touche Edition est activée par ledit utilisateur, ledit menu Edition comprenant :
ledit outil d'ajustement du débit binaire, ledit outil d'ajustement du débit binaire comprenant un affichage de débit binaire pour montrer des valeurs de débit binaire sélectables et des moyens de défilement de débit binaire pour faire défiler lesdites valeurs de débit binaire sélectables ; et
ledit outil de taille de données cible, ledit outil de taille de données cible comprenant une affichage de taille de données cible pour montrer des valeurs de taille de données cible sélectables et des moyens de défilement de tailles de données cible pour faire défiler lesdites valeurs de taille de données cible sélectables.

39. Ordinateur selon la revendication 38, dans lequel ledit menu Edition (14b, 14c, 14d) comprend en plus une importation après la touche Edition pour permettre audit signal audio codé d'être automatiquement importé dans la mémoire dudit lecteur audio numérique portable une fois que ledit codage en couches par tranches binaires dudit signal audio est terminé.

40. Ordinateur selon la revendication 39, dans lequel ledit menu Edition comprend une touche Entrée et une touche Annulation, ladite touche Entrée étant activée par ledit utilisateur pour commencer ledit codage en couches par tranches binaires dudit signal audio et ladite touche Annulation étant activée par ledit utilisateur pour fermer ledit menu Edition sans éditer ledit signal audio.

41. Ordinateur selon la revendication 40, dans lequel ledit menu Edition (14c) comprend en plus une touche Prévisualisation pour permettre à l'utilisateur d'échantillonner une qualité d'un signal audio partiellement codé par ledit codage en couches par tranches binaires dudit signal audio selon le débit binaire ou la taille cible choisie avant de l'exporter.

42. Ordinateur selon la revendication 40, dans lequel lesdits intervalles prédéterminés en kilooctets par seconde comprennent des intervalles de 1 kbps, ledit menu Edition (14d) comprenant en plus :
un outil d'ajustement fin, ledit outil d'ajustement fin permettant audit affichage de débit binaire de montrer des valeurs de débit binaire sélectables à des intervalles de 1 kbps ; et
un outil d'ajustement grossier, ledit outil d'ajustement grossier permettant audit affichage de débit binaire de montrer des valeurs de débit binaire sélectables à des intervalles de 8 kbps.

43. Procédé de codage d'un signal audio et de stockage du signal audio codé dans une mémoire, ledit procédé étant **caractérisé par** les étapes consistant à :
coder le signal audio selon un programme de codage arithmétique en couches par tranches binaires ;
afficher un menu principal sur un écran dudit ordinateur, dans lequel ledit menu principal comprend une barre de menu comprenant une partie d'entrée par touche ayant une pluralité de touches de menu comprenant une touche prédéterminée pour permettre l'ajustement d'un débit d'extraction de données ;
déterminer si un signal de touche est généré en réponse à une activation de l'une desdites touches de menu ;
déterminer, lorsqu'on détermine que ledit signal de touche est généré, si ledit signal de touche correspond ou non à ladite touche prédéterminée ;
déterminer si un débit d'extraction de données a été ou non choisi, lorsqu'on détermine que ledit signal de touche correspond à ladite touche prédéterminée ;
éditer un fichier de signal audio selon un programme de codage arithmétique par tranches binaires audit débit d'extraction de données, lorsqu'on détermine que ledit débit d'extraction de données a été choisi, et sortir un signal audio codé ;
importer ledit signal audio codé dans une mémoire d'un lecteur audio numérique portable lorsque ladite étape d'édition est terminée.

44. Procédé selon la revendication 43, comprenant en plus les étapes consistant à :
déterminer si une fonction d'importation automatique a été ou non choisie ;
stocker ledit signal audio codé dans une mémoire dudit ordinateur lorsque ladite étape d'édition est terminée et qu'on détermine que ladite fonction d'importation automatique n'a pas été choisie ; et
effectuer ladite étape d'importation lorsqu'on détermine que ladite fonction d'importation automatique a été choisie.
